Europäisches Patentamt

European Patent Office

Office européen des brevets

(11) Publication number: **0 097 258**

**B1**

(12) **EUROPEAN PATENT SPECIFICATION**

(45) Date of publication of patent specification: **14.03.90**

(51) Int. Cl.⁵: **G 06 F 9/46**

(21) Application number: **83105178.4**

(22) Date of filing: **25.05.83**

(54) **Computing apparatus and method for operating the same.**

(30) Priority: **29.06.82 US 393244**
**21.06.82 US 390163**
**21.06.82 US 390454**
**21.06.82 US 390485**
**24.06.82 US 391629**

(43) Date of publication of application:
**04.01.84 Bulletin 84/01**

(45) Publication of the grant of the patent:
**14.03.90 Bulletin 90/11**

(84) Designated Contracting States:
**DE FR GB**

(73) Proprietor: **International Business Machines Corporation**
**Old Orchard Road**
**Armonk, N.Y. 10504 (US)**

(72) Inventor: **Reinsch, Roger Alan**
**20663 Greenleaf Dr.**
**Cupertino CA 95014 (US)**

(74) Representative: **Ahlman, Bertel**
**IBM Svenska AB Intellectual Property Department**
**S-163 92 Stockholm (SE)**

(56) References cited:

COMMUNICATIONS OF THE ACM, vol. 13, no. 12, December 1970, pages 727-733, New York, US; C. BETOURNE et al.: "Process management and resource sharing in the multiaccess system ESOPE"

(58) References cited:

PROCEEDINGS OF THE FALL JOINT COMPUTER CONFERENCE, Las Vegas, Nevada, 18th-20th November 1969, pages 27-38, AFIPS Press, Montvale, N.J., US; B.W. LAMPSON: "Dynamic protection structures"

## EP 0 097 258 B1

**Description**

This invention relates to a computing apparatus and to a method for operating such a computing apparatus. More specifically, it relates to the control of intersubsystem access to computing functions and data in a multi-processing environment.

In prior art computing systems of the type characterized by the IBM System/370 (IBM is a registered trademark) executing under control of the Multiple Virtual Systems (MVS) Operating System, a plurality of subsystems provide computing functions and manage data for a plurality of applications. These subsystems and applications execute in various address spaces and according to various priorities, key states, and allocation levels, thus enabling multiple users to share the computing resources of the system.

The usual technique for controlling intersubsystem access is to store information in control blocks describing the user's state, including the current access protocol and allocation level, and to include inline checks throughout the target subsystem to make sure correct processing occurs. These inline checks can and do often result in greatly increased complexity and execution time inefficiencies. For example, in the IBM IMS/VS Version 1, Program Number 5740-XX2, Release 1.5 batch message processing (BMP) regions and message processing (MPP) regions contain application programs for processing data bases managed by a control region. An application region must first be loaded with the IMS control program, then with the application control task, and then those cooperate to bring in the user application subtask. In line checks executed by the operating system and various control programs, assure that the application subtask, for example, is one authorized to access the data managed by the IMS control program. Examples of such inline checks may be observed in the IBM OS/VS2 System Logic Library, Volume 2, IBM Publication SY28-0714-2, HALT/SWITCH/TRACE Syntax Checker, Module IEE1403D, page 2—264. Such inline checks, and the complexities of the BMP/MPP processing, result in execution time inefficiencies in the use of resources and throughput.

Communications of the ACM, vol. 13, No. 12, New-York, Dec. 1970, pages 727—733, describe a process management and resource sharing multiaccess system.

Proceedings of the Fall Joint Computer Conference, Las Vegas, Nevada, Nov. 18—20, 1969, AFIPS Press, 1969, pages 27—38 describe a method of generating functional capabilities for a user under a given allocation level of a user task.

There is, however, a need in the art for improved management of access to computing resources and data, to assure that only legitimate requests are processed and that correct processing occurs for the protocol and allocation level of the requestor (application or subsystem) without requiring separate modules and inline checks.

The present invention is disclosed in the attached claims.

According to the invention, a method is provided for operating a computing apparatus including at least one subsystem having a pool of available functional modules for supporting a plurality of user requests under various access protocols and allocation levels. The new method assures that user requests valid only under some protocols and allocations levels are not executed on behalf of users authorized only for different protocols and levels, and includes the following steps: (1) generating for a user an allocation descriptor describing the user's functional capability; (2) responsive to a request from a user which does not imply a change in functional capability, executing a functional module on behalf of the user according to the user's currently allocated functional capability; and (3) responsive to a request from a user which implies a change in the user's functional capability, allocating functional modules to the user according to a new functional capability only if this allocation is allowed by the user's current functional capability.

According to the apparatus of the invention, a computing system includes at least one subsystem having a pool of available functional modules for supporting a plurality of user requests under various access protocols and allocation levels. Execution means are provided for assuring that user requests valid only under some protocols and allocation levels are not executed on behalf of users authorized only for different protocols and levels, such execution means including means for generating an allocation descriptor describing a user's functional capability; means responsive to a request from a user which does not imply a change in functional capability for executing a functional module on behalf of the user according to the user's currently allocated functional capability; and means responsive to a request from a user which implies a change in the user's functional capability for allocating functional modules to the user according to a new functional capability only if the allocation is allowed by the user's current functional capability.

Brief description of the drawings

Figure 1 is a diagram illustrating the architecture of MVS and the private address space in which the data base management system (DBMS) of the invention resides.

Figure 2 is a flow chart illustrating the states and available generic operations for the application program interface (API) batch (BATCH) protocol.

Figures 3 and 4 are flow charts illustrating the states and available generic operations for the API multiple address spaces for one logical subsystem (MASS) protocol.

Figures 5 and 6 are flow charts illustrating the states and available generic operations for the API single address space for one logical subsystem (SASS) protocol.

2

Figure 7 is a logic diagram showing the relationship between certain modules executed by the subsystem support for application address spaces (SSAM) in processing application calls.

Figure 8 is a diagram showing the relationship between Figures 8A and 8B, while Figures 8A and 8B illustrate control blocks, data areas, and code modules accessed by SSAM in processing application calls.

Figure 9 is a diagram illustrating the directory structure for accessing allocation parameter lists (APL).

Figure 10 is a diagram illustrating the linkage of generic operation request/specific operation processor (GOR/SOP) pairs.

Figure 11 is a diagram illustrating a representative sample of valid function vector list entries (FVLEs).

Description of the preferred embodiment

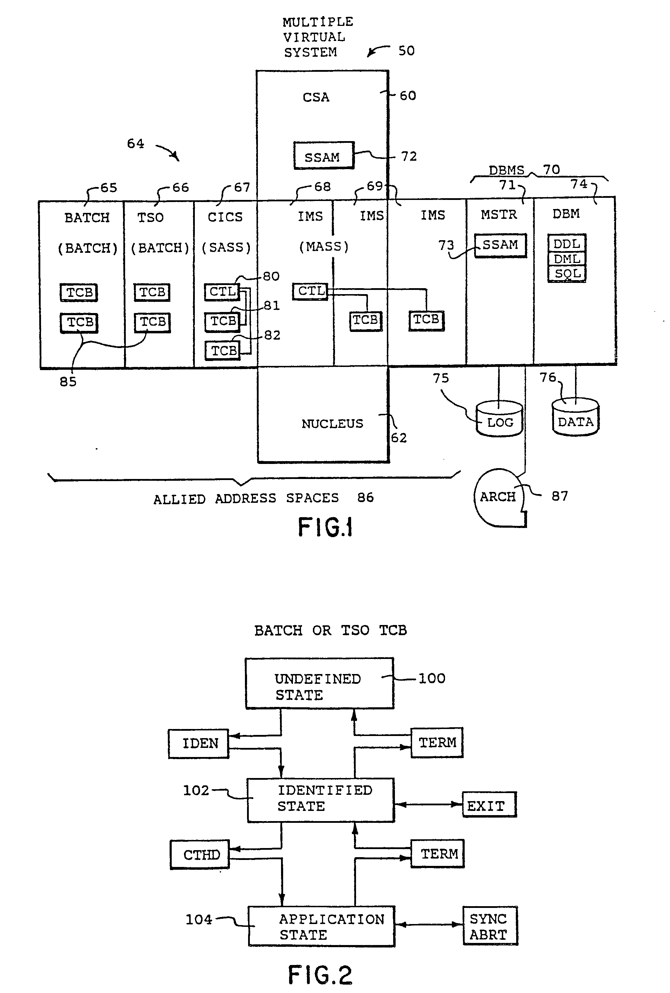

Referring to Figure 1, a storage map is illustrated for a typical IBM MVS system 50, including common system area (CSA) 60, nucleus 62, and a collection of private address spaces 64 comprising batch address space 65, TSO address space 66, CICS address space 67, IMS/VS address spaces 68, 69, and data base management system (DBMS) address spaces master (MSTR) 71 and data base manager (DBM) 74. CICS address space 67 is an example of a single address space for a logical subsystem (SASS) and IMS address spaces 68, 69 are an example of multi-address spaces for one logical subsystem (MASS). A number of task control blocks (TCBs) are illustrated. Batch subsystem address spaces 65 and 66 show only application TCBs 85, there being no control TCB required. Each TCB 85 represents a single, independent application task or work unit. In SASS address space 67, a control (or coordinator) TCB 80 is associated with a plurality of subordinate (that is, non-coordinator) application TCBs 81, 82 in a logical work unit contained within a single address space. In MASS address spaces 68, 69, a control TCB in address space 68 is shown connected to two application task TCBs in address spaces 69. Address spaces 65, 66, 67, 68, and 69 are examples of allied address spaces 86.

Data base management system 70 address space MSTR 71 includes modules providing control, recovery, and logging functions. Thus, log 75 and archive log 87 is shown connected to this address space 71. DBMS 70 address space DBM 74 includes modules controlling access to data repository 76. Such modules may provide a relational data base language such as the IBM Sequel Query Language (SQL), including a data definition language (DDL) and data manipulation language (DML).

Included within DBMS MSTR address space 71 is module SSAM 73, meaning subsystem support of allied address spaces. Some of the functions performed by SSAM are executed in common system area CSA 60, as is illustrated by module SSAM 72. The procedures and structures implementing the present invention reside, for the most part, in SSAM 72, 73.

Any application 80, 81, 82, 85 or system program may become a user of DBMS 70. Thus, any program, task, or address space is allowed to identify to DBMS 70. However, unless that user is specifically authorized, it will not be able to access or modify data in repository 76. Users of DBMS 70 can be of any authority, be executing in any key or state managed by MVS 50. However, as DBMS 70 will insure that only data 76 authorized to the user program can be examined by that program (such as TCBs 80, 81, 82, 85), most DBMS 70 data and control blocks are in address spaces 71, 74 different than users 80, 81, 82, 85, and are maintained in MVS 50 storage pools which are fetch protected and in a supervisor key.

The SSAM components 72, 73 of DBMS MSTR 71 enable DBMS 70 to support several different access protocols, including BATCH, SASS, and MASS access protocols to be described hereinafter in connection with Figures 2—6.

In a subsystem, such as DBMS 70, supporting several different access protocols, some facility must be provided to insure that requests, such as those initiated of DBMS 70 by tasks 80, 81, 82, 85, valid only under some protocols are not issued by users of one of the other protocols. Further, it is useful to provide a facility which is able to rearrange the functions in a pool of available processors within a subsystem, such as DBMS 70, to produce an entirely new protocol without changing previously developed processors and without developing new ones. These facilities are provided by the SSAM components 72, 73 of this invention (hereafter referred to merely as SSAM 73). SSAM 73 is a resource manager within DBMS 70 and controls connections between DBMS 70 and other address spaces 64 running application programs anchored to TCBs 80, 81, 82, 85) hereafter referred to, generically, as TCBs 85). The characteristics of a "resource manager" are described in copending EP application EP—A—0097234 by E. Jenner, "Method and Apparatus for Restarting a Computing System".

An allocation descriptor describes all the generic operation/specific processor pairings (GOR/SOP pairs) which should be allocated, and indicates some prerequisites which must be met before allocation should be performed. These allocation descriptors are the SSAM agent parameter list entry descriptors (SAED), to be described hereafter. In the description which will follow, the function capability represents the current capability of any user of subsystem 70 services. It describes and allows access to all generic operation requests (GORs) allowed at the current allocation level for the appropriate access protocol. This functional capability will be defined hereafter in terms of the generic operations (GORs) this user is anchored to along with the SQL requests and commands available to the user when at the application state.

A GOR/SOP pair is a one to one linkup from a single generic operation request (GOR) to a single specific operation processor (SOP). This establishes which processor is responsible for handling that GOR when this particular allocation is complete. A GOR is a request which is defined over more than one access protocol. Minor differences or restrictions may exist between access protocols. A SOP is a processor which

3

implements a GOR for one or more access protocols. SOPs are invoked via program call (PC) and are completely shielded from unauthorized entry by the linkage mechanism established at allocation. The identify (IDEN) SOP is an exception in that its entry conditions cannot be enforced through allocation of normal PC linkages. PC is a facility provided by MVS for inter-address space communications and transfer of control.

The allocation level, also referred to as state, indicates the current allocation and authority level of a user (such as a TCB 81) and implies which previous levels of allocation and authority checking have been performed before getting to the current one. An access protocol is a collection of predefined GOR descriptions which completely describe one way of accessing a subsystem's services.

An allocation generic operation request is a generic operation request (GOR) for which an allocation process is implied. In the embodiment to be described, these are the IDEN, SIGN, and CTHD generic operation requests. IDEN and CTHD always imply an allocation process. SIGN implies an allocation when requested from the identify or thread allocation level (that is, the identified and application states), but not when requested at the signon allocation level (that is, the signed on state).

An allocation specific operation processor is a specific operation processor which implements an allocation generic operation request. In the embodiment of the invention to be described, it is a SOP which generates a new function vector list (FVL) during allocation.

SSAM 73, as previously noted, manages allocation descriptors which describe completely a user's functional capability. These descriptors are named according to a combination of the access protocol the user is requesting, the level of authority he is requesting (via the particular request he makes), and the presence or absence of certain key parameters which effect his capabilities while executing. The descriptor contains a complete list of what the caller is allowed to do at this level of authority, and is used to allocate functions to the user.

For any request which implies a change in capability (an allocation type request), a name is constructed and a descriptor is fetched. If none exists, that combination of protocol and parameters is illegal and the request is refused. If one does exist, it is used to perform allocation for the new capability. For any request which does not imply a change in capability, the currently allocated functions are allowed and others are not. The ability to allocate different functions is itself allocated.

DBMS 70 provides support for a number of generic operation requests (GORs) under a number of access protocols and allocation levels (or states). These allocation levels allow DBMS 70 to control the execution environment of its users. The interaction of access protocol and allocation level produce the following characteristics of GORs: some GORs are invalid at some allocation levels and some access protocols, and the specific requirements or semantic of any GOR may be different between access protocols or allocation level within a single access protocol. Some allocation levels may not be required or defined under some access protocols. Thus, it is a characteristic and important advantage of this invention that implementation flexibility is provided by allowing sharing of SOPs where this is useful, and allowing separate implementations where the operations are less similar. Each SOP is insured that only authorized entries will be made so no processing time must be spent validating entry. In addition, no SOP is forced to interpret its requestor's allocation level and access protocol to perform the correct function.

Referring now to Figures 2 through 6, the preferred embodiment of the invention as implemented in SSAM 73 provides three protocols: BATCH, SASS, and MASS. The BATCH protocol is provided for application programs that do not have resource management and recovery functions, such as those of batch region 65 and TSO region 66. The single address space subsystem (SASS) protocol is provided for subsystems that do have resource management and recovery functions but operate in one MVS address space only, such as CICS region 67. The multiple address space subsystem (MASS) protocol is provided for subsystems that do have resource management and recovery functions but operate in more than one MVS address space, such as IMS 68, 69.

The ten generic operations (GORs) executed by SSAM 73 implementing the protocols of Figures 2 through 6 are as follows:

| | |
|---|---|
| IDEN | Identify |
| SIGN | Signon |
| CTHD | Create Thread |
| TERM | Terminate |
| EXIT | Establish Exits |
| PREP | Prepare |
| COMM | Commit |
| ABRT | Abort |
| SYNC | Synchronize |
| RIUR | Resolve Indoubt Unit of Recovery |

In addition to the above GORs executed by SSAM, DBMS 70 provides three additional GORs to support database service requests, the bind function for plans and utility functions, and one GOR to perform command processing.

Each of the SSAM protocols will be described in greater detail hereafter, in connection with Tables 1

4

through 18. By way of introduction, Signon (SIGN) provides a new user identifier, create thread (CTHD) establishes an application program connection to commands and databases, terminate (TERM) removes an allocation level or state, prepare (PREP), commit (COMM), abort (ABRT), and synchronize (SYNC) request DBMS 70 processing of database 76 changes previously requested, resolve indoubt unit of recovery (RIUR) resolves situations caused by abnormal terminations, and establish exit (EXIT) establishes a way for DBMS 70 to notify the user during DBMS 70 termination. Identify (IDEN) establishes the initial functional capability for an application address space, and is a prerequisite to all of the other GORs. As will be discussed in more detail hereafter, because the invoker of IDEN has no authority to any DBMS 70 program calls (PCs) at entry to the IDEN allocation SOP, the normal GOR/SOP pair linkage cannot be used, and therefor only one SOP can be implemented. However, the allocation descriptor is still accessed to guide the IDEN SOP in its processing and to determine which GORs should be allocated.

Referring now to Figure 2, the subsystem support of allied memories (SSAM) application program interface (API) batch protocol will be described. In Figure 2, the possible states of authority and capability which can exist between a task 85 executing in a batch 65 or TSO 66 allied memory and DBMS 70. Each such task 85 is considered by DBMS 70 to be independent. A task 85 which has not yet identified to DBMS 70 is in undefined state 100. Execution of IDEN moves the task into identified state 102, where it has the functional capability of requesting TERM, EXIT, and CTHD. Execution of a CTHD GOR moves the task into application state 104 where it can issue calls to SQL to access data 76 or DBMS 70 commands such as START, STOP, and DISPLAY. While in application state 104, the application can also request of SSAM 73 execution of SYNC, ABRT, and TERM GORs.

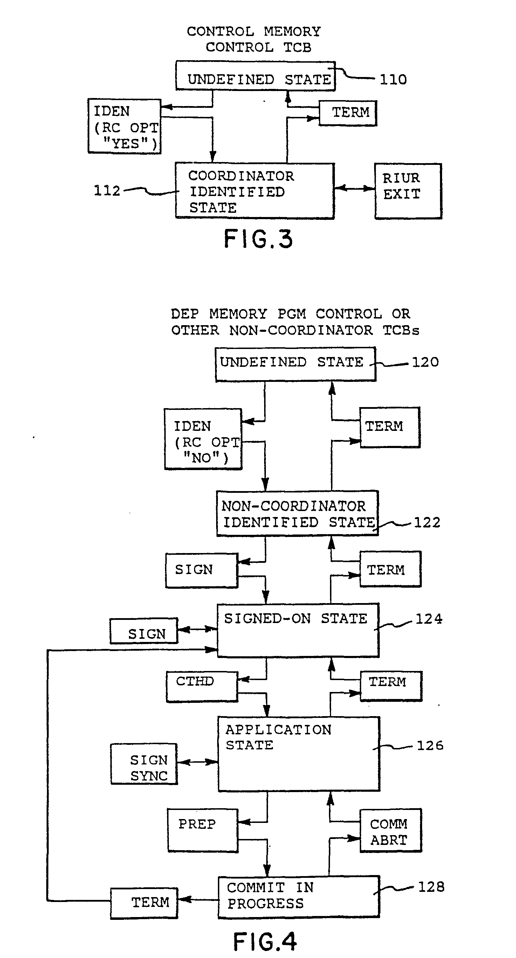

Referring next to Figures 3 and 4, the SSAM API multiple address space subsystem (MASS) protocol will be described. In Figure 3 is illustrated the possible states of authority and capability which can exist between MASS allied memory control coordinator TCBs and DBMS 70, while Figure 4 illustrates those for MASS dependent memory program control or other non-coordinator TCBs. A control TCB which has not identified to DMBS 70 is in undefined state 110, and can only issue the IDEN GOR request with recovery coordinator (RC) option=yes. Doing so, moves the control TCB into coordinator identified state 112, where it has the functional capability to request RIUR, EXIT, SIGN, and TERM GORs. A non-coordinator TCB in undefined state 120 has the functional capability to request the IDEN GOR, with recovery coordinator (RC) option=no, and thus move into the non-coordinator identified state 122. At state 122, the TCB is given the functional capability of having executed on its behalf the SIGN and TERM GORs, the former for establishing signed-on state 124. At state 124, the TCB has the functional capability represented by GORs SIGN, CTHD, and TERM, with CTHD moving the TCB into application state 126. In state 126, SIGN, SYNC, PREP, and TERM GORs are available to the TCB. A PREP GOR moves the TCB into the commit in progress state 128 where, halfway through a two phase commit process, the TCB is only given the functional capability of the COMM, ABRT, and TERM GORs. Different specific operation processors (SOPs) are executed for SIGN GORs requested at the identified, signed-on and application states 122, 124, and 126 respectively. The SIGN GOR available at application state 126 is used to work through a queue of users accessing the same data, without requiring IDEN and SIGN at state 124 for each member of the queue with each access to data 76.

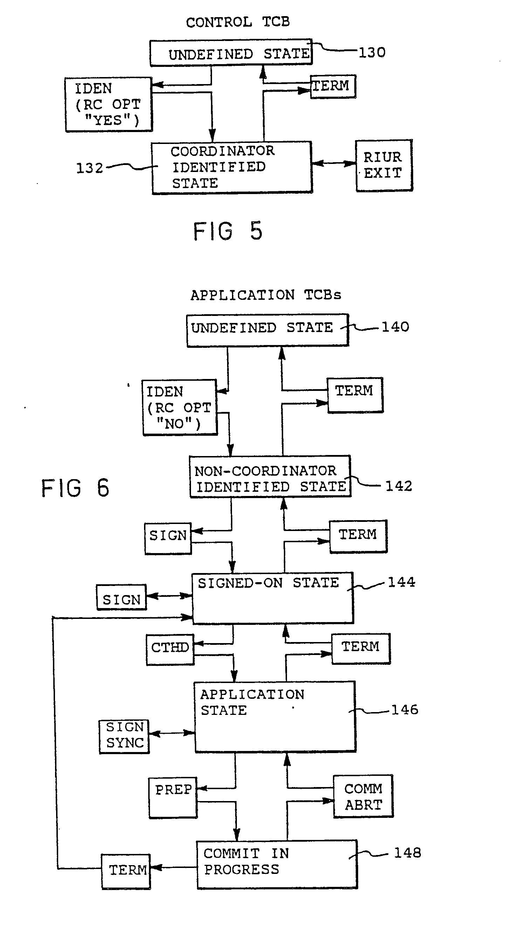

Referring next to Figures 5 and 6, the SSAM API single address space subsystem (SASS) protocol will be described. In Figure 5 is illustrated the possible states of authority and capability which can exist between SASS allied memory control coordinator TCB 80 and DBMS 70, while Figure 6 illustrates those for SASS dependent memory program control or other non-coordinator TCBs 81, 82. A control TCB 80 which has not identified to DMBS 70 is in undefined state 130, and can only issue the IDEN GOR request with recovery coordinator (RC) option=yes. Doing so, moves the control TCB into coordinator identified state 132, where it has the functional capability to request RIUR, EXIT, SIGN, and TERM GORs. A non-coordinator TCB in undefined state 140 has the functional capability to request the IDEN GOR, with recovery coordinator (RC) option=no, and thus move into the non-coordinator identified state 142. At state 142, the TCB is given the functional capability of having executed on its behalf the SIGN and TERM GORs, the former for establishing signed-on state 144. At state 144, the TCB has the functional capability represented by GORs SIGN, CTHD, and TERM, with CTHD moving the TCB into application state 146. In state 146, SIGN, SYNC, PREP, and TERM GORs are available to the TCB. A PREP GOR moves the TCB into the commit in progress state 148 where, halfway through a two phase commit process, the TCB is only given the functional capability of the COMM, ABRT, and TERM GORs. Different specific operation processors (SOPs) are executed for SIGN GORs requested at the identified, signed-on and application states 142, 144, and 146 respectively. The SIGN GOR available at application state 146 is used to work through a queue of users acessing the same data, without requiring IDEN and SIGN at state 144 for each member of the queue with each access to data 76.

Having described the protocols of Figures 2—6, a description will now be given of the ten generic operation requests (GORs) executed by SSAM 73 at and between the various protocol states.

Identify (IDEN) allows an application TCB to identify itself to DBMS 70. An allied agent having authorization to appropriate functions is created and the calling TCBs subsystem affinity table (SSAT) entry for the subsystem is filled in so that DBMS 70 can find its related structures and invoke other DBMS services. This GOR is implemented in code modules ID30 (which calls AM00) and ID50. Module ID30, SSAM Identify Processing Routine, establishes allied users connection with DBMS 70 and allows use of further requests via the program request handler (PRH) interface, as is set forth in Table 1. Module ID50, Create an Identify Level Allied Agent, creates an identify level allied agent using a copy of the descriptor supplied by the caller, updates the given agent (AGNT) block and the program request handler work area (PRHW) block with the execution block (EB) address of the created allied agent, and returns to the caller the address of the agent control element (ACE) allocated for the agent, as is set forth in Table 2. Module AM00, SSAM Allocation Support, acquires storage and initializes it as a function vector list (FVL) with information from an allied agent parameter list entry (APLE) that is input to this module, and stores the address of the FVL in the SSAM resource access list entry (RALE) that is also input to the module, as is set forth in Table 4.

Signon (SIGN) establishes plan access authority for a user. This GOR is implemented in modules SI30 (which calls AM00), SI31, and SI32. Module SI30, Signon (Identify Level) Processing, signs on under an identify agent, as is set forth in Table 5. Module SI31, Signon (signon level) Processing, replaces the user identifier and or correlation identifier for the allied agent, as is set forth in Table 6. Module SI32, Signon (thread level) Processing, switches the user identifier associated with this allied agent and verifies the authority of the new user identifier; it also updates the correlation identifier if specified, as set forth in Table 7.

Create Thread (THRD) verifies authorization and allocates plans to allow a user access to DBMS 70 resources, such as data facilities 76, via, for example SQL. This GOR is implemented in module CT30 (which calls AM00). Module CT30, Create Thread Processing Routine, constructs the environment to enable the requestor to execute as an allied user; if a resource name is specified, it is validated against the user identifier of the requestor; a create allied agent request is issued to modify the existing allied agent; allocation is performed; and control is returned to the caller under a new resource access list (RAL), is as set forth in Table 8.

Terminate (TERM) terminates the most recent level of connection. This GOR is implemented in modules CT80, SI80, and ID80, all of which call DM00, and in module TR00. Module CT80, Terminate Thread Level Processing, terminates a create-thread agent, thus restoring the signon level of access to the subsystem, as is set forth in Table 9. Module SI80, Terminate Signon Level Processing, terminates an existing signon agent, allowing execution to continue at the identify level, as is set forth in Table 10. Module ID80, Identify Termination, terminates allied identify agents, deletes related control blocks allowing execution to continue in the undefined state, as is set forth in Table 3. Module DM00, SSAM Deallocation Support, deletes the function vector list (FVL) build by SSAM for an allied agent during allocation, as is set forth in Table 11. Module TR00, Process Terminate Commit Option, performs the function requested by the 'commit option' of terminate thread. The parameter is validated, processing is performed, the function request block (FRB) return and reason codes are updated, and control is returned to the terminate thread function, as is set forth in Table 15.

Establish Exits (EXIT) allows the application to establish and cancel exits that allow it to know about the state of DBMS 70. This GOR is implemented in module EXTO, SSAM Establish Exit Processing, which provides identify level agents the capability to establish exists through an event control block (ECB) that will be posted during subsystem 70 stop command processing or subsystem termination. The capability is also provided to cancel these exits after they have been established, as is set forth in Table 12.

Prepare (PREP) corresponds to phase 1 of commit, the requestor becoming the coordinator, DBMS 70 the participant. This GOR is implemented in module PR00, Phase 1 Commit Processing, which provides allied agent access to phase 1, or the "vote collection" phase, of the two phase commit process. The network identifier is validate, the resource access list (RAL) header is marked (suppress RARQ bit) indicating that the thread is in the suppress RARQ state after the prepare and the result of the vote is recorded in the resource access list entry (RALE). The suppress RARQ bit is checked by linkage services and reset by commit and abort. The vote result bit is checked by commit during its phase 2 validation, all as is set forth in Table 13.

Commit (COMM) commits the current work, such as an update to DBMS 70 resources 76 changed or created. This GOR is implemented in module CM00, Phase 2 Commit Processing, which provides allied agent access to phase 2 of the two phase commit process. A new point of consistency is thus established for the resources that have been updated by the thread. The suppress RARQ state is cleared (suppress RARQ bit) from the RAL header so that the thread can continue. The bit is set by prepare and checked by linkage services. CM00 is set forth in Table 14.

Abort (ABRT) backs out the current work, removing the effect of updates made to DBMS 70 resources, such as data 76. This GOR is implemented in module AB00, Backout Updates to a Thread's Resources, which provides allied agent access to functions which backout its resources to their last point of consistency. The 'suppress RARQ state' is cleared (suppress RARQ bit) from the resource access list (RAL) header so the thread can continue. The bit is set by prepare and checked by linkage services. AB00 is set forth in Table 16.

Synchronize (SYNC) is equivalent to PREP and COMM, performing phases 1 and 2 of commit. This GOR is implemented in module SY00, Synchronize-Single Phase Commit, which provides allied agent access to the single phase commit process where this subsystem 70 is the coordinator. A point of consistency with respect to a thread's associated resources is established. If the new point of consistency cannot be established the module invokes backout to re-establish the prior point of consistency with respect to the thread's resources, as is set forth in Table 17.

Resolve Indoubt Unit of Recovery (RIUR) allows the requesting subsystem to inform DBMS 70 as to the final commit/abort decision for units of recovery (URs) which went in-doubt as a result of terminating after prepare but before commit. This GOR is implemented in module RIA0, SSAM Resolve Indoubt UR Processing which provides coordinator services for the data base subsystem 74 to do abort or phase 2 commit of the two phase commit process for threads that were indoubt when an abnormal termination occurred of either the allied agent recovery coordinator including its daughters or subsystem 70. The thread also becomes indoubt if it goes to normal termination after a phase 1 (prepare) request but before a phase 2 (commit or abort) request. The E. Jenner application referenced above provides additional information on this recovery process. RIA0 is set forth in Table 18.

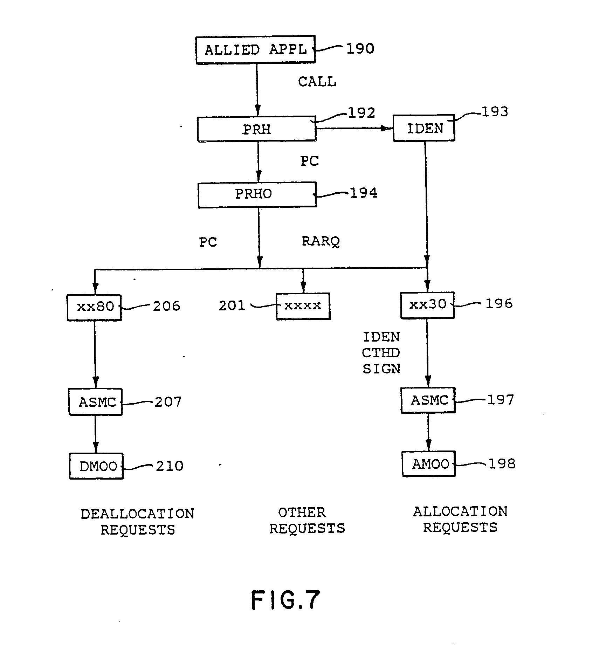

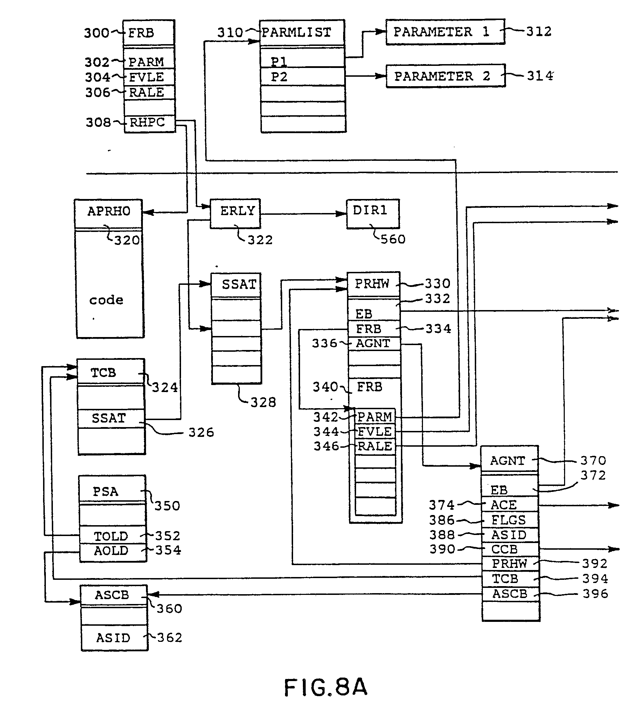

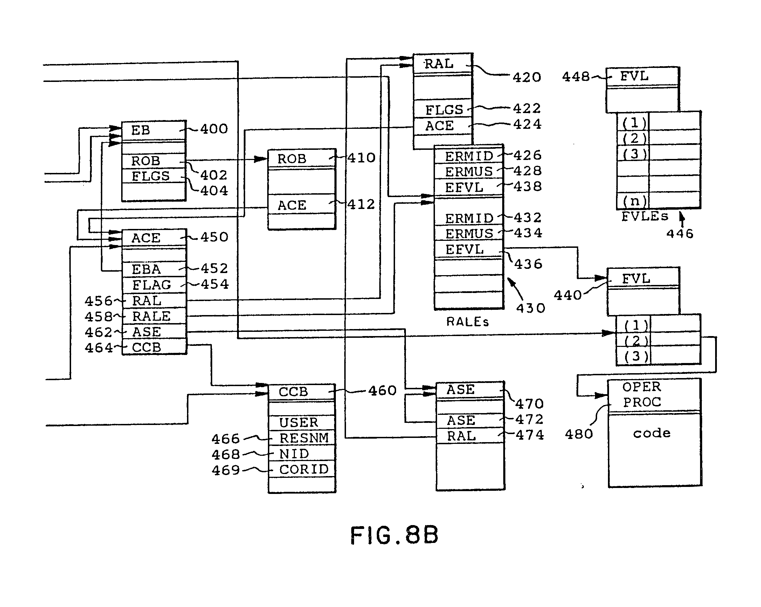

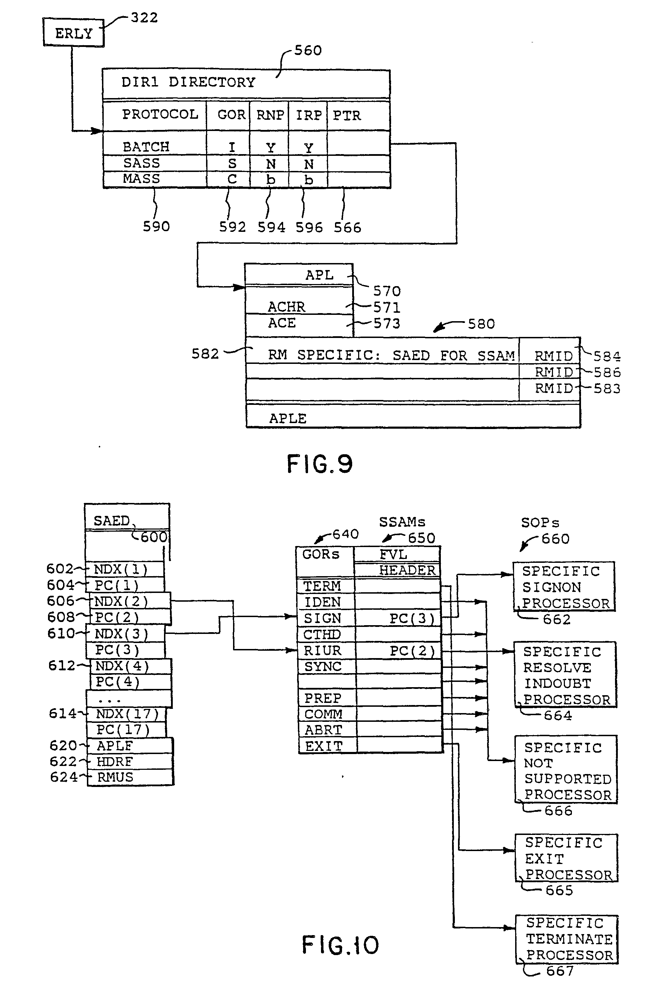

Referring now to Figure 7, a description will be given of the processing module calling sequence executed in response to an allied application 190 call issued from one of regions 86 to DBMS 70. This calling sequence will be described further in connection with the control structures of Figures 8 and 9 hereafter.

An application 190 is an allied address space 86 issues a call to program request handler interface 192 (Table 19), which issues a program call (PC) to program request handler (PRH0) 194 (Table 20). Depending upon the type of the request, the calling sequence is to one of modules 196, 201 or 206. In the case of modules (xx30) 196 processing goes to IDEN (CT30, Table 1), SIGN (SI30, Table 5), or CTHD (CT30, Table 8) and thence to create allied agent 197 and AM00 (Table 4) for allocation. In the case of modules 201, processing goes to SIGN (SI31, Table 6), SIGN (SI32, Table 7), RIUR (RIA0, Table 18), SYNC (SY00, Table 17), PREP (PR00, Table 13), COMM (CM00, Table 14), ABRT (AB00, Table 16), or EXIT (EXT0, Table 12). In the case of modules (xx80) 206, processing goes to TERM (ID80, Table 3), TERM (SI80, Table 10), or TERM (CT80, Table 9), and thence to terminate allied agent 207 (to be further described hereafter) and DM00 210 (Table 11) for deallocation.

Referring now to Figure 8, a description will be given of the control block structure and linkages established and used by SSAM 73 to assure that unauthorized calls from users are not executed.

In Figure 8, user blocks are FRB 300, PARMLIST 310, and PARAMETERS 312, 314. MVS 50 blocks are PSA 350, TCB 324, ASCB 360, and SSAT 328. The remaining blocks pertain to DBMS 70.

Function request block (FRB) 300 includes fields PARM 302, FVLE 304, RALE 306, and RHPC 308. RHPC 308 links FRB 300 to ERLY 322, which points (indirectly through other blocks) to Directory 560 (See Figure 9), and to the program request handler 320. FRB 300 will be copied into program request handler work area 330, where as FRB 340 it provides PARM linkage 342 to parameter list (PARMLIST) 310, FVLE 344 linkage to ASE 470, and RALE 346 linkage to RALE (including ERMID 432, ERMUS 434, and EFVL 436). PARMLIST 310 provides pointers P1, P2 to parameters 312, 314, respectively.

Program request handler work area (PRHW) includes EB pointer 332 to EB 400, FRB 334 pointer to FRB 340, and AGNT pointer 336 to AGNT 370. ERLY 322 also provides linkage to the SSAT 328 entry which points to PRHW 330. Agent block 370 includes EB pointer 372 to execution block 400, ACE pointer 374 to agent control element 450, a collection of flags 386, ASID field 388, CCB pointer 390 to composite capabilities block 460, PRHW pointer 392 to PRHW 330, TCB pointer 394 to task control block 324, and ASCB pointer 396 to address space control block 360. TCB 324 includes SSAT pointer 326 to subsystem affinity table 328, and ASCB 360 includes address space identifier field 362. Prefix save area PSA 350 includes pointers TOLD 352 to the old task 324, and AOLD 354 to the old address space 360.

Execution block 400 includes pointer ROB 402 to request option block ROB 410, and a collection of flags 404. ROB 410 includes ACE pointer 412 to agent control element 450. ACE 450 includes flags field 454, and pointers EBA 452 to execution block 400, RAL 456 to resource access list 420, RALE 458 to currently active resource access list entry (RALE) including ERMID 432, ERMUS 434, and EFVL 436, ASE 462 to agent status element ASE 470 and CCB 464 to composite capabilities block CCB 460.

Resource access list RAL 420 includes in a header flags fields 422 and pointer field ACE 424 to agent control element 450, and a plurality of resource access list entries (three being shown), each with an ERMID, ERMUS, and EFVL field. EFVL 438, 436 pointers link RAL 420 to a plurality of function vector lists 448, 440. Each FVL 448, 440 includes a plurality of function vector lists entries, one for each SOP 480 associated with the function. Agent status element ASE 470 includes pointer fields ASE 472 pointing to ASE 470 and RAL 474 pointing to resource access list 420. Composite capabilities block CCB 460 includes a user identifier field (USER) and RESNM 466, NID 468, and CORID 469 fields. RESNM 466 names a plan, which names the data bases 76 the user is authorized to access.

The linkage through the blocks illustrated in Figure 8 is as follows in order to validate an ACE: PSA 350 to TCB 324 to SSAT 328 with ERLY 322 to PRHW 330 to EB 400 to ROB 410 to ACE 450. The ACE is validated back to AGNT 370 to TCB 324 and ASCB 360. In order to access a SOP 480, the linkage is as follows: ACE 450 and FRB 340 to RALE 436 to FVL 440 field named by FRB (FVLE 344) to SOP 480. ASEs 470 hold pushed down allocations which will be reinstated when the current level terminates.

Agent control element (ACE) 450 represents a recoverable or nonrecoverable unit of work (that is, an agent) in subsystem 70. ACE 450 is the focal point for the resource and process control structures associated with an agent. These structures describe the resource and execution status of the agent at any given time. ACE 450 is a global construct and exists for the life span of the agent. EBA field 452 is the EB chain anchor. Flag 454 provides flags specifying the following status indicators: system agent or thread; agent in must complete; start local tracing; stop local tracing; APL status=application thread or signon/identify thread; agent termination in progress abnormal or normal. RAL 456 provides the address of execution time resource access list created by allocation control. CCB 464 provides the address of the CCB 460 representing the current capability. ASE 462 provides the address of stacked status. This field is used to save the address of status saved when an agent creation request is processed specifying agent structure reuse. At agent termination, the saved status is popped from the stack. If there is no stacked status, this field=0. RALE 458 gives the address of RALE while an execution unit is within an RARQ linkage request, set on entry and reset on exit.

Agent control block (AGNT) 370 is used to keep track of allied agents at the identify, signon, and create thread levels. EB 372 is a pointer to the associated execution block 400. ASID 388 is the address space ID of the allied agent. FLGS 386 include agent in-doubt status bits indicating that in-doubt status is, inter alia, resolved or insure-commit. The other fields are pointers to related blocks, as shown in Figure 8.

Agent parameter list (APL) 570 is a parameter list indicating certain processing characteristics and resources associated with an allied agent. This list is input to both the create allied agent function and to the allocation control function of ASMC. ACHR field 571 includes a flag indication that the current agent structure should be reused, or a new agent structure created. ACE field 573 provides flags to be moved to the ACE 450 indicating that the ACE is created by create thread (CTHD) or by IDEN or SIGN. APLE 580 represents a repeating group, with each entry naming a resource to be allocated to the allied agent and the RMID of the manager of that resource.

Agent status element (ASE) 470 represents agent status saved as a result of a create allied agent request. This block is chained LIF0 from the field ASE 462 in ACE 450. ASE 472 is the chain field, and is anchored in associated ACE 450 to ASE 462. RAL pointer 474 is the initial RAL 420 address. This field is propagated to each ASE 470 on the ASE chain.

Composite capabilities block (CCB) 460 contains information related to an allied agent. USER is the user identifier of the allied request. RESNM 466 is the resource name, or plan name. NID 468 is the network identifier, and CORID 469 is the correlation ID.

Execution block (EB) 400 represents an execution unit associated with an agent, with an EB 400 for each agent. ACE 450 contains the first, or primary, EB for the agent. Subsequent EBs needed for synchronous, asynchronous, and/or cross memory services may result in a new execution unit being allocated to the agent. Each new execution unit is represented by another EB 450 chained from ACE 450. An EB 400 is a DBMS 70 construct, whereas an execution unit (TCB or SRB) is an MVS 50 construct. ROB 402 is the address of the ROB 410 associated with this execution unit. FLGS 404 indicate various status conditions, such as EB is primary or secondary; execution unit owns log read cursor; TCB mode execution unit; SRB mode execution unit; trace currently in control; purge stack required; execution unit awaiting termination of a synchronous unrelated execution unit; address space control task; service task controller task; recovery control task; service task; allied task; application in control of updates; DBMS 70 is in control; synchronize with termination.

Function request block (FRB) 300 is used for communication between an application and DBMS 70. PARM 302 is the parameter list 310 address. FVLE 304 is the FVLE number within FVL 440. RALE 306 is the RALE 430 number. RHPC 308 is the program request handler PC number.

Program request handler work area (PRHW) 330 provides a save area for PRH0 320 (Table 20) and the function-dependent program request handlers that it invokes. EB 332 is a pointer to the associated execution block 400. FRB 334 is a pointer to the key 7 FRB 340 within PRHW 330. AGNT 336 is a pointer to the associated agent control block 370.

Resource access list (RAL) 420 is a mapping macro which contains linkage information to resource manager routines (SOPs) which process application program requests (GORs). FLGS 422 contain flags from SAED 600 HDRF field 622. ACE 424 is a pointer to ACE 450. RALEs 430 includes ERMID 426, 432, the RALE identifier; ERMUS 428, 434, the resource manager usage; and EFVL 436, 438, the FVL 448, 440 pointer.

SSAM agent parameter list entry descriptor (SAED) 600 is invoked to create a static local SSAM entry in an APL 570. The invoked form of APL is used by resource manager SSAM to create descriptors in its directory 560. SAED 600 is included to map the SSAM entry 584 in an APL 570. APL 570 is a parameter list that contains one entry for each resource manager that supports allocation for the corresponding allied agent. SAED is the SSAM entry in APL 570. NDX 602 is the index in FVL 650 of the program call (PC) number for the related SOP 660. PC 604 is the PC EX (Entry Index) of the PC number. The LX (Linkage Index) portion of the PC number is assigned during initialization of DEMS. APLF 620 contains the APL 570 flags. HDRF 622 are the RAL 420 header flags 422, and RMUS 624 contains the RALE 430 user flags RMUS 434.

Referring now to Figure 9, a description will be given of directory 560 (Figure 8). Directory 560 is used to perform or guide allocation requests. Access to directory 560 is by way of ERLY block 322. Directory 560 includes protocol name fields 590, generic operation request (GOR) fields 592, resource name (plan) parameter field 594, indoubt resolution parameter field 596, and pointer field 566. Directory 560 protocol names include BATCH, SASS and MASS. (Not in Table 21). For each, the valid combinations for GOR field 592, RNP field 594, and IRP field 596 are given in Table 21. In Table 21, the DIR 1 NAME is the concatentation of fields 590, 592, 594, and 496; Table 21A gives for each valid DIR 1 NAME the allocation processing flags and persistent flags which become part of the environment. In Table 22, the abbreviations used for these flags are named. The various field values shown in Figure 9 are, for GOR 592: I (IDEN), S (SIGN), C (CTHD), and b (blank); for RNP 594: Y (yes, allow normal two phase commit with the requestor as coordinator), N (no, no support for resolution, allow SYNC only), b (blank, take default, which varies by protocol), and Q (inquiry, read only). A pointer 566 is provided for each valid combination of protocol name, GOR, RNP and IRP, with each pointer linking to a separate allocation parameter list (APL) 570.

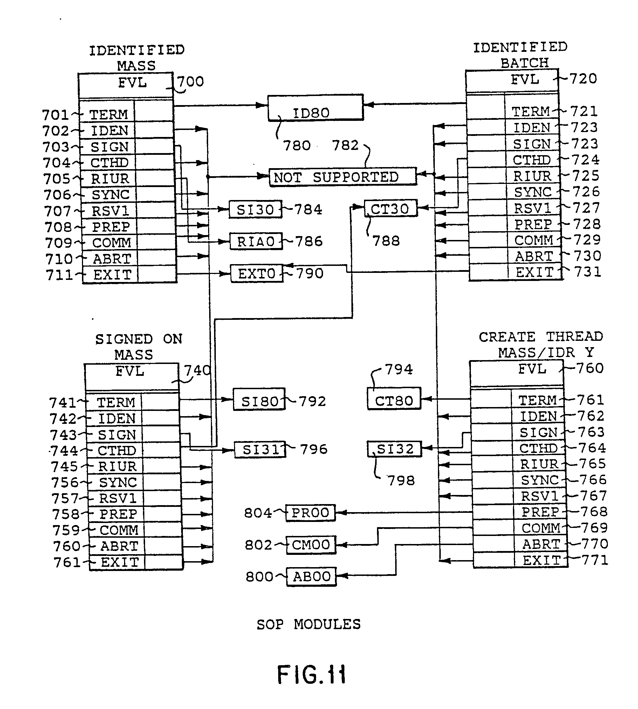

An APL 570 is provided for each valid state within each protocol, and includes a header portion having ACHR flags 571 and ACE flags 573 and an entry (APLE) portion 580. ACHR 571 flags are used to control the allocation process as it reuses or creates agent structures. Flags ACE 573 identify if the requestor is at the thread level (application state) and will be moved into ACE 450. SSAM 73 is an example of a resource manager (as that term is defined and used in the above referenced Jenner application). Each APL 570 includes in APLE 580 for each resource manager 584, 586, 583 an SSAM agent parameter list entry descriptor (SAED) 582, an example of which for IDEN state for MASS or SASS is illustrated in Figure 10.

Referring to Figure 10, SAED 600 illustrates the SAED entry 582 for resource manager SSAM for MASS or SASS protocol 590, for GOR 592 of I. SAED 600 includes entries for seventeen GOR/SOP pair descriptors, each pair including a NDX entry and a PC entry. These entries provide linkage to SOPs 660 through function vector list 650. For identified state for SASS and MASS protocols, the authorized GORs are TERM, SIGN, RIUR, and EXIT, and these are shown linked to SOPs 662, 664, 665, and 667, respectively. All unauthorized GORs are linked to SOP 666, the not supported processor, which ABENDs the requestor.

Referring now to Figure 11, function vector lists 700, 720, 740, and 760 are shown illustrating GOR/SOP pairs for other protocols and allocation levels. For a MASS protocol at the identified state 122, TERM GOR 701 is linked to SOP ID80 780 SIGN GOR 703 to SOP SI30, RIUR GOR 705 to SOP RIA0 786, and EXIT GOR 711 to SOP EXT0 790. The GOR/SOP pairs for batch protocol at identified state, for MASS protocol at signed on state, and for MASS protocol at create thread state are similarly illustrated. The various SOPs 780—804 are described in Tables 1—18. Table 21 provides a description of all valid SAEDs for one implementation of this aspect of the invention. In the examples of Figure 11, SIGN is implemented three times, as SI30, SI31, and SI32. At each level, the work to perform to do the signon function is very different, so separate SOPs 784, 796, and 798 are provided. SIGN is not allowed for BATCH users, with any attempt to execute such being abended by not supported SOP 782. CTHD is supported directly for the identify state for BATCH protocols and only from the signed-on state for MASS protocol, with the same SOP CT30 788 invoked for both. TERM processing is implemented three times: CT80 has variations based on environmental flags which make certain options illegal under some protocols and create thread environments. Identified state TERM for BATCH and MASS protocols are both supported by the same processor SOP ID80 780. In this case, the SOP has a significant amount of subsystem 70 functions, and it is most efficient to keep BATCH and MASS protocols together and test flags to modify process flow. RIUR is supported only for coordinator TCBs at the identified level. All other attempts to execute RIUR abend in not supported SOP 782.

SOPs which do allocation of functions include ID30, SI30, CT30 (each invoking AM00) and SI32, which does allocation of database records based on user identifier. SOPs which do deallocation include CT80, SI80, and ID80 (each of which invoke DM00). Other SOPs operate under only one allocation and change non-allocation parts of the execution environment.

Having now described the control structures of Figures 8 and 9, a further description will be given of the processing module calling sequence of Figure 7. In response to the call issued from application 190, SSAM 73 executes module PRH 192, and lines 27 and 28 issues a program call to get to supervisor state and pass control to module PRH0 194. PRH module 192 acts as a buffer between the user (who must link-edit this module 192 with the program 190 requesting subsystem 70 functions) and the real subsystem 70 modules (Tables 1—18) that process these functions (GORs), as is set forth in Table 19. PRH 192 expects a standard parameter list, with the first parameter the function request block (FRB) 300, which it will pass to program request handler 194 (shown as 320 in Figure 8A) via program call RHPC 308 PRH0 module 194 (320) determines whether subsystem 70 is operational; invokes the correct program request handler, or error translator, or issues RARQ directly based on FRB 300 contents and the state of subsystem 70; manages serialization of agent 370, as set forth in Table 20. With reference to Figure 8, PRH0 194 (320) examines ERLY 322, PSA 350, TCB 324, and ASCB 360 to find SSAT 328 slot to get to PRHW 330 for the requesting user 190. Then, FRB 300 is copied into PRHW 330 at 340, which is a DBMS 70 frozen copy of FRB 300 in the key of DBMS 70 to prevent the user from changing its FRB between validation and use. Then, RALE index 346 is used to select EFVL 436, FVL 440, and FVLE 344 is used to compute the slot within FVL 440 to issue the program call contained therein to get to SOP 480. This linkage structure is traversed for every request except IDEN for any function.

IDEN, on the other hand, examines ERLY 322, PSA 350, TCB 324 and ASCB 360 and builds PRHW 330, fills in SSAT 328, builds AGNT 370 and CCB 460. It then goes to directory 560 (Figure 9) to get the appropriate APL 570, and invokes allocation router (create allied agent ASMC) 197 to build an allied agent structure, which includes EB 400, ROB 410, RAL 420, and ACE 450 using APL 570. Router 197 then invokes each resource manager identified by RMID 584, passing related parameters 582 with which those resource manager routines will build the FVLs 448, 440 as appropriate. Module AM00 creates FVL 652 based on specific contents of SAED 600 contained within the selected APL 570. Thus, IDEN picks the APL 570 through this concatenation of protocol name 590 and GOR 592=I and sets up FVL 650 which indicates for user associated with SSAT 326 the valid GORs 640 to the correct SOPs 660. As illustrated in Figure 10, as an example, the ABRT GOR 640 is not supported at this protocol at the identified state, while SIGN and RIUR are. Processing now waits for the next call from the user, which may be SIGN. A user request for SIGN

9

navigates under the control of PRH0 194 and SOP 480 (662) the blocks built by IDEN. SIGN is invoked if and only if authorized, as is shown by FVL 652 for the invoking users current allocation level. If authorized, specific signon processor SOP 662 constructs name 590, 592, 594, 596, which selects by pointer 566 the APL 570 appropriate to this request. APL 570 is given to create allied agent 207 which will create ASE 470 containing old RAL 420; update RAL 420 and ACE 450 with information from APL 570; invoke each resource manager 583, 584, 586 passing parameters 582. Each resource manager builds an FVL from this new level of allocation. For SSAM, SAED 582, 600 builds FVL 652 by invoking AM00. Figure 7 illustrates, inter alia, a signed on MASS 740.

Having described the Figures illustrating the various procedures of the invention, and the control blocks and structures which the procedures reference, a summary view of the operation and apparatus of the invention will be provided.

Functional capability represents the current capability of a user 80—85 of subsystem 70. It describes completely the functions provided to the user and provides linkage to all generic operation requests (GORs) 640 allowed at the current allocation level, or state (100—148) for a given access protocol 590. Thus, the functional capability of a user is represented by the following:

(1) Access protocol name 590.

(2) Capability characteristics (flags described in Tables 21A and 22, and retained between allocation calls, i.e., STUI).

(3) Generic Operation/Specific Processor (GOR/SOP) list (most recent SAED 582 used to construct FVL 650).

Access protocol name 590 is used to construct the name used to access the allocation descriptor APL 570 which was used to create this functional capability. It will be used by all subsequent allocation specific operation processors SOPs 660 in processing requests. This value never changes after the first allocation is performed and the initial functional capability is built. Access protocol name 590, in the preferred embodiment, is a parameter on IDEN and will be either BATCH, SASS, or MASS, depending on the particular connection involved.

Capability characteristics are copied from the allocation descriptor into the functional capability when a successful allocation process occurs. These characteristics indicators show directly the key features of the latest allocation such that all specific operation processors (SOPs) implementing generic operation requests (GORs) at this allocation level may adjust their processing appropriately. These indicators allow for interpretation of the invoker's condition when interpretation is desired. The interpretation of these characteristics indicators must be consistent between all SOPs which might operate at any given allocation level. Capability characteristics are maintained in agent control element ACE 450 and the resource access list 420 header. These indicators show all DBMS 70 SOPs 480 the characteristics of the currently allocated and executing application program. The interpretation of these characteristics indicators is consistent between all SOPs 480. One such indicator is the "subsystem" indicator used by the data base manager 74 in determining the correct action for its commit requests. This indicator is set whenever the currently allocated thread supports recovery indoubt resolution, DBMS 70 cannot unilaterally act on any commit request. Another such indicator is the "subject to user interruption" indicator used by all DBMS 70 resource managers which perform must complete operations. This characteristic is common to all allocation levels for the BATCH access protocol.

The generic operation-specific processor list is information copied from the allocation descriptor into the functional capability when a successful allocation process occurs. This lists all generic operation requests (GORs) the requestor will be allowed to issue after processing of the current request is completed. It also associates specific operation processors (SOPs) to process each of the GORs the requestor is allowed to use at the new allocation level under his access protocol. This allows a completely different SOP to provide support for each different allocation level (state) and access protocol for which the GOR is valid. In this case, no interpretation would be required to determine the requestor's characteristics. GORs not listed in the GOR/SOP paris list are associated with the not supported, or unauthorized SOP. There is no GOR which relates directly to the not supported SOP. The functional capability is produced by an allocation GOR processed by an allocation SOP. In the preferred embodiment described, the GOR/SOP pairs list is contained in the resource access list entries (RALEs) 430 and in the function vector lists (FVL) 448, 440, 700, 720, 740 connected to those RALEs. The RALE/FVLE combination is used in DBMS 70 linkage to enforce valid entry to the allocated (and only the allocated) SOPs 480. The first functional capability is built by the IDEN operation processor (SOP). The SIGN and CTHD allocation SOPs initiate additional allocations creating new functional capabilities and new allocation levels (states 100—148). All components of DBMS 70 have an opportunity to contribute to the functional capability by setting up RALE—FVLE information during an internal allocation process.

Prior to entry to the allocation specific operation processor, system linkages must have insured that this is a proper (authorized) invocation. For unauthorized requests, the not supported SOP should have been invoked or a program check should have occurred.

The allocation SOP first assembles the name of the allocation descriptor from the access protocol name, the name of the allocation GOR this allocation SOP is supporting, and the parameters provided by the requestor. An attempt to access the allocation descriptor is then made. If nothing is returned for the developed name, the request must be invalid (syntax error). The requestor is so informed and the allocation SOP does not proceed with allocation. If an allocation descriptor is returned, the indicated environmental checks are performed by the allocation SOP. If any of the prerequisites are not met, the requestor is so informed and the allocation SOP does not proceed with allocation. When all prerequisites are met, the allocation SOP will complete the allocation process, update the functional capability with the information in the allocation descriptor and return to the caller.

The allocation SOP is completely insensitive to what has been allocated. The allocation SOP operates as a list processor, updating the functional capability with the information contained in the allocation descriptor. Processing of this request may have caused allocation of additional allocation GORs or it may not have. Even if exactly the same GORs are allocated at the new allocation level (state) the set of SOPs supporting those GORs may be completely different. Each allocation is independent. Each allocation is a complete allocation. Each GOR is reallocated to some SOP (possibly "not supported") and old allocations (the previous allocation levels) are hidden from access. When the new allocation level is removed, the previous allocation level and GOR set will again be available to the user from the ASE queue 470. In the embodiment described, SSAM 73 invokes an internal service to let all DBMS 70 resource managers know of the new allocation. These resource managers build RALEs 430, FVLEs 446 and whatever else is required to update their piece of the functional capability. The SSAM SIGN GOR is a good example of one which changes at each level. When the identified state 122 SIGN allocation SOP is invoked, a new allocation is performed to hide the identified state 122 functions while preparing for the creating of a thread. The signed-on state 124 SIGN SOP is not an allocation SOP at all—it merely records the new user ID. The SIGNSOP at the application state is yet another completely different processor—it must verify that the new user is allowed to operate the same way the current user is performing. This last switch in processing function was performed by the CTHD allocation SOP without participation of the SIGN SOP, without adding any requirement to the SIGN SOP to interpret where it is before it processes its next request, and without any specific support by the CTHD allocation SOP.

The key used to access allocation descriptors includes (1) access protocol name, (2) generic operation name, and (3) encoded parameter values. In the embodiment described, this key is the concatenation of fields PROTOCOL 590, GOR 592, RNP 594, and IRP 596. This key yields a pointer 566 to an APL 570 which is used to generate the allocation descriptor. The allocation descriptor includes (1) prerequisite conditions tests, (2) capability characteristics, and (3) GOR/SOP pair listings.

The encoded parameter values are encoded by the allocation SOP as follows: for finite value parameters (yes, no, or other multiple choice), the parameter value provided with the invocation of the allocation SOP is encoded or copied into the key. For other parameters (where there are too many valid parameter values), the presence or absence of the parameter is encoded into the key. This encoding must be consistent between all SOPs which implement any single GOR. Since the allocation GOR name 592 is also part of the allocation descriptor address, there is no requirement that the encodings be consistent across GORs. The omission of a parameter is indicated by a specific coding (b) of the allocation descriptor address (fields 592, 594, 596). The access protocol name 590 is part of the allocation descriptor address. Each can support different default characteristics for the same GOR 592. In the preferred embodiment described herein, for the SSAM 73 CTHD GOR/SOP pair, the value of indoubt resolution (IRP) 596 ("Y", yes the requestor subsystem will support indoubt resolution; "N", no it will not; or "b", not specified) is encoded into the allocation descriptor name. The default for the BATCH access protocol 590 is No (in fact, Yes is illegal) and for the subsystem type connections (SASS and MASS), the default is Yes. Also from the SSAM CTHD GOR/SOP pair, the presence or absence of the resource name parameter (RNP) 594 is encoded as a Y or N. This causes selection of different allocation descriptors, which cause different allocations to occur. In particular, the data base manager DBM 74 is provided the name of a default application plan when no resource name 594 is provided (See Table 21).

If no key is found in directory 560 for the concatenation of fields 590, 592, 594, 596 provided in the request, the requested operation is invalid. The supplied parameters do not meet the syntax rules for this GOR 592 under this access protocol 590. If a valid key is produced, however, it produces a complete description of the characteristics of the allocation and the complete list of GORs the requestor will now be allowed to perform at the new allocation level (state). The previous functional capability is removed (pushed down into ASE 470) and only those GORs specifically allocated by this request are available. When this allocation level (state) is terminated, the previous functional capability is reestablished (popped up from ASE 470) and again made available to the requestor.

In order for certain allocations to be performed environmental conditions must be met. For allocation SOPs which would be almost identical in support of an allocation GOR for multiple access protocols 590, it is appropriate for these prerequisite indicators to guide the allocation SOP in its processing for this particular request. The interpretation of these prerequisite conditions indicators is consistent between all SOPs which implement any single GOR. There is no requirement that the encodings be consistent across GORs. These indicators do not become part of the functional capability, and are discarded at the end of the allocation SOP invocation. In the embodiment described herein, for SSAM IDEN processing, one of these indicators is used to determine whether a "my coordinator is my ancestor" test should be performed. This is performed only for the SASS access protocol. Since there can be only one IDEN allocation SOP, the use of these flags allows accommodations in processing for the different access protocols 590.

Capability characteristics indicate to all SOPs implementing GORs at this allocation level (state) the characteristics of the currently allocated capability under this access protocol 590. The interpretation of these characteristics indicators is consistent between all SOPs which might operate at any given allocation level.

GOR/SOP pairs listings 600 lists all GORs 640 the requestor will be allowed to issue after processing of the current request is completed. It also associates specific SOPs to process each of the GORs the requestor is allowed to use at the new allocation level under his access protocol. GORs not listed are associated with the "not supported" SOP 666.

TABLE 1
(ID30) SSAM IDENTIFY PROCESSING ROUTINE

```
DSN3ID30: PROC.
INITIALIZE AND TRACE ENTRY TO THIS MODULE.
ZOUTERDO:
DO.
   COPY THE FRB ACROSS, AND INITIALIZE IT.
   IF TOO FEW OR TOO MANY IDENTIFY PARAMETERS ARE SUPPLIED THEN
      DO.
         SET RETURN/REASON CODES.
         LEAVE ZOUTERDO.
      END.
   COPY THE PARAMETER LIST AND THE PARAMETERS ACROSS (RECOVERY
      COORDINATOR PARM IF PRESENT).
   OBTAIN THE SSAT ENTRY VALUE FOR OUR SUBSYSTEM.
   IF THE CALLING TCB HAS ALREADY IDENTIFIED TO THIS SUBSYSTEM THEN
      DO.
         SET RETURN/REASON CODES.
         LEAVE ZOUTERDO.
      END.
   IF THE CONNECTION NAME APPEARS TO BEGIN WITH A NON-PRINTABLE
      CHARACTER THEN
      DO.
         SET RETURN/REASON CODES.
         LEAVE ZOUTERDO.
      END.
   IF RECOVERY COORDINATOR OPTION IS INVALID THEN
      DO.
         SET RETURN/REASON CODES.
         LEAVE ZOUTERDO.
      END.
   GET THE APPROPRIATE APL FOR THIS IDENTIFY REQUEST.
   IF APL IS NOT FOUND THEN
      DO.
         SET RETURN/REASON CODES.
         LEAVE ZOUTERDO.
      END.
   IF RECOVERY COORDINATION IS INVALID FOR THIS CONNECTION TYPE
      DO.
         SET RETURN/REASON CODES.
         LEAVE ZOUTERDO.
      END.
```

TABLE 1A
(ID30) SSAM IDENTIFY PROCESSING ROUTINE

```
ZINNERDO:
DO.
    IF THE CONNECTION NAME AND TYPE DO NOT MATCH A PREVIOUS
        REQUEST (IF ANY) FROM THIS ADDRESS SPACE THEN
    DO.
        SET RETURN/REASON CODES.
        LEAVE ZINNERDO.
    END.
    LOCATE A (POSSIBLE) COORDINATOR AGENT WITH THIS
        CONNECTION NAME AND TYPE AND REMEMBER ITS ADDRESS.
    ASSUME THAT WE WILL ALLOCATE NEW AGNT/CCB BLOCKS.
    IF RECOVERY COORDINATION IS ALLOWED THEN
        SELECT RECOVERY OPTION (SPECIFIED OR DEFAULT).
            WHEN "YES" IS SPECIFIED
                DO.
                    IF A PREV COORDINATOR EXISTS THEN
                        DO.
                            IF IT IS ALIVE THEN
                                DO.
                                    SET RETURN/REASON CODES.
                                    LEAVE ZINNERDO.
                                END.
                            ELSE (IT IS DEAD)
                                DO.
                                    REMEMBER TO NOT ALLOCATE A NEW AGNT/CCB (WE
                                        WILL REINCARNATE THIS ONE).
                                    SET RETURN/REASON CODES TO "CONDITIONALLY
                                        SUCCESSFUL".
                                END.
                        END.
                    ELSE (A PREV COORDINATOR IDENTIFY DOES NOT EXIST)
                        DO.
                            LOCATE A COORDINATOR AGNT WITH THIS
                                CONNECTION NAME.
                            IF ONE IS FOUND THEN
                                DO.
                                    SET RETURN/REASON CODES.
                                    LEAVE ZINNERDO.
                                END.
                        END.
                END (OF "RECOVERY COORDINATION IS SPECIFIED").
            OTHERWISE (RECOVERY COORDINATION IS NOT SPECIFIED)
                DO.
                    IF A PREV COORDINATOR DOES NOT EXIST THEN
                        OR IT EXISTS AND IS DEAD THEN
                    DO.
                        SET RETURN/REASON CODES.
                        LEAVE ZINNERDO.
                    END.
                    A PREV COORD IDENTIFY DOES EXIST AND IT IS NOT DEAD,
                        REMEMBER TO ISSUE WARNING MESSAGE LATER IF IT
                        SHOULD BE AND THIS MOTHER HAS ANY UNRESOLVED UR'S.
                END (OF "RECOVERY COORDINATION NOT SPECIFIED").
        END (OF SELECT GROUP FOR REC. COORD OPTION)
```

TABLE 1B
(ID30) SSAM IDENTIFY PROCESSING ROUTINE

```
IF PSW KEYS ARE TO BE CHECKED AND
    THIS IDENTIFY IS A SUBORDINATE IDENTIFY AND
    KEYS DON'T MATCH THEN
  DO.
    SET RETURN/REASON CODES.
    LEAVE ZINNERDO.
  END.
IF TCB HEIRARCHY IS TO BE CHECKED AND
    THIS IS A SUBORDINATE IDENTIFY THEN
  DO.
    IF THIS TCB IS NOT IN THE SAME ADDRESS SPACE AS THE
        COORDINATOR THEN
      DO.
        SET RETURN/REASON CODES.
        LEAVE ZINNERDO.
      END.
    SCAN TCB ORIGINATING CHAIN STARTING WITH THE ORIGINATOR
        (MOTHER) TCB OF THIS TCB AND THEN ITS MOTHER UNTIL
        WE FIND THE MOTHER TCB OR REACH THE END.
    IF WE DID NOT FIND THE COORDINATOR AS A MOTHER TCB THEN
      DO.
        SET RETURN/REASON CODES.
        LEAVE ZINNERDO.
      END.
  END.
IF IT IS A NON-SUBSYSTEM TYPE IDENTIFY OR
    IT IS A COORDINATOR (SUBSYSTEM TYPE) IDENTIFY THEN
  DO.
    CHECK THAT THIS USER AUTHORIZED TO USE THIS DBMS WITH
        THE SPECIFIED PROTOCOL (CONNECTION TYPE).
    IF THE USER IS NOT AUTHORIZED THEN
      DO.
        SET RETURN/REASON CODES.
        LEAVE ZINNERDO.
      END.
    ASSUME USERID TO BE THE VERIFIED USERID.
    HAVE THE USERID SET/CHANGED IF NECESSARY.
    IF THE USERID RETURNED IS BLANKS OR NULL THEN
        USE THE INSTALLATION'S DEFAULT USERID AS THE USERID.
  END.
ASSUME THAT WE WILL BE REESTABLISHING THE MOTHER AGNT
    FOUND EARLIER.
```

TABLE 1C
(ID30) SSAM IDENTIFY PROCESSING ROUTINE

```
IF NEW AGNT/CCB PAIR IS TO BE ALLOCATED
     (WE WILL NOT BE REESTABLISHING AN EXISTING AGENT) THEN
   DO.
     ALLOCATE AGNT/CCB PAIR.
     IF RECOVERY COORDINATION IS ALLOWED FOR THIS AGENT THEN
        DO.
          IF IT IS A NON-COORDINATOR SUBSYS TYPE AGENT THEN
             SET ITS MOTHER PTR TO POINT TO ITS
                  COORDINATOR AGENT.
          ELSE
             DO.
                SET ITS MOTHER PTR TO POINT TO THE MASTER AGENT.
                INDICATE THAT THIS IS A COORDINATOR AGENT.
             END.
        END.
     ELSE
        IT IS NON-SUBSYS (SSSC COORDINATED) AGENT, MAKE THE
             SSSC COORDINATOR AGENT AS ITS MOTHER.
     CHAIN IN THE AGNT BLOCK.
   END.
ELSE (WE WILL NOT BE REESTABLISHING AN EXISTING AGENT)
   DO.
     REINITIALIZE THE EXISTING AGNT/CCB PAIR PRESERVING SOME OF
          THE INFORMATION.
     REMEMBER TO ISSUE WARNING MESSAGE IF NEW WORK
          BEGINS AND THIS COORDINATOR AGENT STILL
          HAS UNRESOLVED UR'S.
   END.
INITIALIZE THE AGNT/CCB BLOCKS AS NECESSARY KEEPING IN
     MIND THAT WE MAY BE REINITIALIZING AN EXISTING (BEING
     REESTABLISHED) AGENT.
GETMAIN—THE PROGRAM REQUEST HANDLER WORK AREA (PRHW),
     INITIALIZE IT, AND SET FRBFBACK (FEEDBACK).
CALL DSN3ID50—ALLOCATE AN IDENTIFY LEVEL ALLIED AGENT.
UPDATE THE ACE TO POINT TO THE CCB WE FOR THIS AGENT.
UPDATE THE ASCE WITH THE IDENTIFY LEVEL INFO.
INCREMENT THE IDENTIFY AND IEFSSREQ/IDENTIFY COUNTS IN THE ASCE.
UPDATE ASCE TO INDICATE IDENTIFY HAS OCCURRED AND HAS TAKEN
     CONTROL OF THE ADDRESS SPACE FROM THE IEFSSREQ PROCESSOR.
IF WARNING MESSAGE IS TO BE ISSUED THEN
     DO.
        ISSUE THE MESSAGE.
        REMEMBER THAT IT HAS BEEN ISSUED (WE DON'T WANT TO ISSUE
             IT FOR FURTHER NEW WORK FOR THIS CONNECTION).
     END.
     TRACE THIS SUCCESSFUL IDENTIFY REQUEST.
   END (OF "ZINNERDO").
END (OF "ZOUTERDO").
MOVE OUR FRB TO THE CALLERS FRB (USER PORTION ONLY).
TRACE EXIT FROM THIS MODULE.
RETURN TO THE CALLER OF DSN3ID30.
END DSN3ID30.
```

# EP 0 097 258 B1

## TABLE 2
### (ID50) SSAM CREATE IDENTIFY LEVEL ALLIED AGENT

```
DSN3ID50: PROC.
TRACE ENTRY TO THIS MODULE.
SET THE SSAT FOR THE CURRENT TCB TO THIS ALLIED AGENT (PRHW).
MAKE THE LOCAL COPY OF THE APL DESCRIPTOR.
INVOKE CREATE ALLIED AGENT USING THE LOCAL COPY OF
      THE DESCRIPTOR.
UPDATE THE PRHW BLOCK SUPPLIED BY THE CALLER WITH THE EB ADDRESS
      OF THE CREATED ALLIED AGENT.
UPDATE THE AGNT BLOCK SUPPLIED BY THE CALLER WITH THE EB ADDRESS
      OF THE CREATED ALLIED AGENT.
TRACE EXIT FROM THIS MODULE.
END DSN3ID50.
```

## TABLE 3
### (ID80) SSAM IDENTIFY TERMINATION ROUTINE

```
DSN3ID80: PROC.
LOCATE INPUT PARAMETERS AND INITIALIZE.
TRACE ENTRY TO THIS MODULE.
GETMAIN AN AREA AND COPY THE STACK INTO IT (THIS WILL ALLOW
     PROCESSING TO CONTINUE AFTER TERMINATE ALLIED AGENT HAS
     FREED THE STACK).
OUTERDO:
DO.
  COPY AND VERIFY INPUT PARAMETERS.
  MARK THE AGNT BLOCKS OF ALL SUBORDINATE AGNTS AS "CRIPPLED"
     (THEY WILL BE DRIVEN TO END OF TASK WHEN THEY MAKE THEIR
     NEXT CALL TO DSNAPRH).
  INVOKE TERMINATE ALLIED AGENT SERVICE. (ORGINAL STACK GONE).
  IF THIS TCB OWNS THE TERMINATING AGENT THEN
     RESET THIS TCB'S SSAT ENTRY (REMOVE PRHW POINTER).
  DELETE ANY EXITS ASSOCIATED WITH THE AGENT (SET UP BY EXT0).
  IF A COORDINATOR AGNT BLOCK HAS NO REMAINING SUBORDINATES
        OR IF THE TERMINATING AGNT IS A SUBORDINATE THEN
     CLEAN UP ITS BLOCKS—THEY ARE NO LONGER NEEDED.
  ELSE
     MARK THE AGNT BLOCK "DEAD".
  TRACE EXIT FROM THIS MODULE. /= TRACING OCCURS EARLY =/
  IF WE ARE RUNNING UNDER THE ASCE OF THE TERMINATING AGENT
        AND DBMS PROCESSING FOR THE ADDRESS SPACE IS COMPLETE
     DE-INITIALIZE THE ADDRESS SPACE (ID30 PREVENTED THIS BEFORE).
END OUTERDO.
RETURN.
END OF DSN3ID80.
```

## TABLE 4
### (AM00) SSAM ALLOCATION SUPPORT

```
DSN3AM00: PROC.
TRACE ENTRY TO THIS MODULE.
INITIALIZE.
ACQUIRE LOCAL STORAGE FOR THE ALLIED AGENT'S FVL.
INITIALIZE FUNCTION VECTOR LIST.
DO UNTIL ALL PCEX VALUES PROCESSED.
     FORM FVL PC NUMBERS USING VALUES PASSED IN SAED.
END.
SET SSAM RESOURCE ACCESS LIST ENTRY (RALE) POINTER TO THE FVL.
TRACE THE EXIT FROM THIS MODULE.
RETURN WITH RETURN CODE (0).
END DSN3AM00.
```

16

## TABLE 5
### (SI30) SIGNON (IDENTIFY LEVEL) PROCESSING

```
DSN3SI30: PROC.
TRACE THE ENTRY TO THIS MODULE.
ESTABLISH ADDRESSABILITY TO REQUIRED CONTROL BLOCKS.
INITIALIZE RETURN AND REASON CODE IN THE FRB.
COPY INPUT PARAMETERS TO SYSTEM KEY STORAGE.
INITIALIZE APL NAME FOR GET REQUEST.
GET APL DESCRIPTOR FOR CREATE ALLIED AGENT REQUEST.
ACQUIRE STORAGE FOR A COPY OF THE APL.
COPY DESCRIPTOR TO ACQUIRED STORAGE.
COPY THE USERID PARAMETER INTO THE CCB.
COPY THE CORRELATION ID TO THE CCB.
INVOKE CREATE ALLIED AGENT TO MODIFY THE EXISTING ALLIED AGENT.
INDICATE THAT THIS AGENT MUST UNDERGO SIGNON TERMINATION AT EOT.
TRACE THE EXIT FROM THIS MODULE.
RETURN CODE(0).
END DSN3SI30.
```

## TABLE 6
### (SI31) SIGNON (SIGNON LEVEL) PROCESSING

```
DSN3SI31: PROC.
TRACE THE ENTRY TO THIS MODULE.
ESTABLISH ADDRESSABILITY TO REQUIRED CONTROL BLOCKS.
COPY THE PARAMETERS TO SYSTEM KEY STORAGE.
SET CCB FIELDS FOR NEW USERID.
TRACE THE EXIT FROM THIS MODULE.
RETURN CODE(0).
END DSN3SI31.
```

## TABLE 7
### (SI32) SIGNON (THREAD LEVEL) PROCESSING

```
DSN3SI32: PROC.
TRACE THE ENTRY TO THIS MODULE.
ESTABLISH ADDRESSABILITY TO REQUIRED CONTROL BLOCKS.
LOCATE THE AGNT BLOCK THAT CONTAINS THE CREATE_THREAD
     ISSUER'S PSW KEY.
IF THE CURRENT PSW KEY TO THE ONE SAVED DURING CREATE THREAD
     ARE NOT EQUAL THEN ABEND. (THIS USER HAS DIFFERENT AUTH.)
COPY THE PARAMETERS TO SUBSYSTEM KEY STORAGE.
IF AUTHORIZATION CHECK IS REQUIRED THEN
   DO.
      CHECK AUTHORIZATION OF NEW USERID.
      IF USERID NOT AUTHORIZED THEN
         SET RETURN AND REASON CODE AND EXIT
   END.
/= DO MINI-REALLOCATION =/
INVOKE ACCOUNTING FOR THE NEW USER.
CLOSE SQL CURSORS FOR THE PREVIOUS USER.
UPDATE CCB FIELDS.
WRITE CONTINUE_LOG RECORD.
TRACE THE EXIT FROM THIS MODULE.
RETURN CODE(0).
END DSN3SI32.
```

## TABLE 8
## (CT30) SSAM CREATE THREAD PROCESSING ROUTINE

```
DSN3CT30: PROC.
TRACE ENTRY TO THIS MODULE.
ESTABLISH ADDRESSABILITY TO SSAM GLOBAL STORAGE STRUCTURES.
INITIALIZE FRB RETURN AND REASON CODES.
INITIALIZE APL DESCRIPTOR NAME.
ASSIGN DEFAULTS TO PARAMETERS.
COPY PARAMETERS TO SUBSYSTEM KEY STORAGE.
IF INVALID PARAMETER THEN
    PERFORM ERROR PROCESSING AND EXIT.
GET APL DESCRIPTOR.
GET STORAGE FOR DESCRIPTOR COPY.
COPY THE DESCRIPTOR TO DYNAMIC STORAGE.
IF USERID VALIDATION REQUIRED THEN
    VALIDATE RESOURCE NAME AGAINST USERID.
    IF VALIDATION FAILS THEN
        PERFORM ERROR PROCESSING AND EXIT.
IF THE UNIQUENESS CHECK FLAG IS ON THEN
    DO.
        VERIFY THE UNIQUENESS OF THE NETWORK ID WITHIN
            THE CURRENT CONNECTION.
        IF NOT UNIQUE THEN
            PERFORM ERROR PROCESSING AND EXIT.
    END.
COPY THE NETWORK ID, CORRELATION ID, RESOURCE NAME
    AND WEIGHTING FACTOR INTO THE CCB.
STORE THE CALLER'S PSW KEY IN THE AGNT BLOCK.
INVOKE CREATE ALLIED AGENT TO MODIFY THE EXISTING ALLIED AGENT.
INDICATE THAT THREAD TERMINATION MUST BE DONE FOR THIS AGENT.
TRACE THE EXIT FROM THIS MODULE.
RETURN CODE(0).
END DSN3CT30.
```

## TABLE 9
## (CT80) TERMINATE THREAD LEVEL PROCESSING

```
DSN3CT80: PROC.
TRACE THE ENTRY TO THIS MODULE.
COPY AND VERIFY INPUT PARMS.
COMPARE THE CURRENT PSW KEY WITH THAT IN THE AGNT BLOCK.
IF NOT EQUAL THEN ABEND.
CALL DSN3IR00—PROCESS TERMINATE OPTION.
IF THE FRB RETURN CODE IS NONZERO THEN
        PERFORM EXIT TRACE AND RETURN TO CALLER.
INVOKE TERMINATE ALLIED AGENT TO MODIFY THE EXISTING ALLIED AGENT.
RESET THE PSW KEY RECORDED IN THE AGNT BLOCK.
RESET THE CORRELATION ID. RESOURCE NAME, AND NETWORK ID IN THE CCB.
TRACE THE EXIT FROM THIS MODULE.
RETURN CODE(0).
END DSN3CT80.
```

## TABLE 10
## (SI80) TERMINATE SIGNON LEVEL PROCESSING

```
DSN3SI80: PROC.
TRACE THE ENTRY TO THIS MODULE.
VALIDATE INPUT PARAMETERS
INVOKE TERMINATE ALLIED AGENT TO MODIFY THE EXISTING ALLIED AGENT.
RESTORE THE USERID IN THE CCB.
TRACE THE EXIT FROM THIS MODULE.
RETURN CODE(0).
END DSN3SI80.
```

TABLE 11
(DM00) SSAM DEALLOCATION SUPPORT

```
DSN3DM00: PROC.
TRACE THE ENTRY TO THIS MODULE.
ESTABLISH ADDRESSABILITY TO INPUT PARAMETER.
FREE THE FUNCTION VECTOR LIST.
ZERO THE SSAM RESOURCE ACCESS LIST ENTRY.
TRACE THE EXIT FROM THIS MODULE.
RETURN CODE(0).
END DSN3DM00.
```

TABLE 12
(EXT0) SSAM ESTABLISH EXIT PROCESSING MODULE

```
DSN3EXT0: PROCEDURE.
  TRACE MODULE ENTRY.
  VERIFY EXIT PARAMETER IS ACCESSIBLE.
  IF REQUEST IS ESTABLISH EXIT THEN
    IF EXIT DOES NOT ALREADY EXIST THEN
        DO.
          SAVE ECB ADDRESS IN THE EXIT CHAIN OFF THE ASCE.
          SET RETURN/REASON CODES TO 'SUCCESSFUL COMPLETION'.
        END.
      ELSE
        SET RETURN AND REASON CODES
            TO 'DUPLICATE EXIT SPECIFIED'.
    ELSE
      IF REQUEST IS CANCEL EXIT THEN
        IF EXIT IS FOUND THEN
            DO.
              RESET EXIT CHAIN ENTRY.
              SET RETURN/REASON CODES TO 'SUCCESSFUL COMPLETION'.
            END.
          ELSE
            SET RETURN AND REASON CODE TO 'EXIT NOT FOUND'.
        ELSE
          SET RETURN AND REASON CODE TO 'EXIT PARAMETER'.
    TRACE MODULE EXIT.
    RETURN.
END DSN3EXT0.
```

TABLE 13
(PR00) PHASE 1 COMMIT PROCESSING

```
DSN3PR00: PROCEDURE.
   TRACE MODULE ENTRY.
   IF PSW KEY NOT EQUAL TO ISSUER OF CREATE THREAD THEN ABEND.
   SELECT (FRB_PARM_COUNT).
      WHEN (0)                         /=    NETWORK_ID NOT SPECIFIED  =/
         DO.
     .     IF NETWORK_ID HAS BEEN PROVIDED ON CREATE THREAD THEN
               CALL XPR00.
            ELSE
               SET RETURN AND REASON CODE TO 'NID NOT SPECIFIED'.
         END.
      WHEN (1)                         /=    NETWORK_ID IS SPECIFIED    =/
         DO.
            GET LOCAL COPY OF THE NID.
            IF NID IS NULL AND         /=    WAS A NULL NID SPECIFIED   =/
               DOES NOT EXIST THEN
               SET RETURN/REASON CODE TO 'NID DOES NOT EXIST'.
            ELSE
              IF NID WAS SPECIFIED ON CREATE_THREAD THEN
                 SET RETURN AND REASON CODE TO
                 'NID NOT ALLOWED ON PREPARE'.
              ELSE
                 DO.
                   IF NETWORK_ID IS UNIQUE THEN
                     DO.
                       MOVE NETWORK_ID TO THE CCB.
                       CALL XPR00.
                     END.
                   ELSE
                     DO.
                       SET RETURN AND REASON CODE TO 'NID NOT UNIQUE'.
                     END.
                 END.
         END.
      OTHERWISE
         SET RETURN AND REASON CODE TO 'FRB PARM COUNT INVALID'.
   END.
   TRACE MODULE EXIT.
   RETURN.

XPR00: PROC.
   INVOKE RECOVERY MANAGER TO COLLECT COMMIT VOTES.
   SET SUPPRESS RARQ BIT IN RAL.
   SAVE RESULT OF THE VOTE IN THE RALE.
   IF VOTE IS 'YES' THEN
      SET RETURN AND REASON CODE TO 'SUCCESSFUL COMPLETION'.
   ELSE
      SET RETURN AND REASON CODE TO 'PHASE 1 VOTE IS NO'.
   RETURN.
END XPR00.

END DSN3PR00.
```

### TABLE 14
### (CM00) PHASE 2 COMMIT PROCESSING

```
DSN3CM00: PROCEDURE.
   TRACE MODULE ENTRY.
   IF PSW KEY NOT EQUAL TO ISSUER OF CREATE THREAD THEN ABEND.
   IF FRB PARAMETER COUNT IS ZERO THEN
       DO.
         IF PHASE 1 DONE THEN
            IF YES VOTE THEN
               DO.
                  INVOKE RECOVERY MANAGER TO COMMIT UPDATES.
                  RESET SUPPRESS RARQ BIT IN RAL HEADER.
                  SET RETURN/REASON CODE TO 'SUCCESSFUL COMPLETION'
               END.
            ELSE
               SET RETURN AND REASON CODE TO 'ABORT REQUIRED'.
          ELSE
            SET RETURN AND REASON CODE TO 'PREPARE MISSING'.
       END.
   ELSE
       SET RETURN AND REASON CODE TO 'FRB PARAMETER COUNT'.
   TRACE MODULE EXIT.
   RETURN.
END DSN3CM00.
```

TABLE 15
(TR00) PROCESS TERMINATE COMMIT OPTION

```
DSN3TR00: PROCEDURE.
  TRACE MODULE ENTRY.
  INITIALIZE FRB RETURN AND REASON CODES.
  SELECT (FRB_PARM_COUNT).
    WHEN (0)                          /=   DEFAULT IS 'DEAL'        =/
      SET LOCAL COMMIT_OPTION TO 'DEAL'.
    OTHERWISE
      SET LOCAL COMMIT_OPTION FROM CALLER'S AREA.
      (BAD PARM COUNT HAS BEEN CHECKED BY OUR CALLER).
  END.
  SELECT (COMMIT_OPTION).
    WHEN ('DEAL')                     /=   ONLY DEALLOCATE          =/
      DO.
        VALIDATE THAT DEALLOCATE IS OK AND SET FRBRC1.
        IF FRBRC1=0 THEN         /=   DEAL VALID FOR THREAD    =/
          INVOKE RECOVERY MANAGER TO FREE BLOCKS.
      END.
    WHEN ('SYNC')                     /=   PERFORM 1 PHASE COMMIT   =/
      DO.
        VALIDATE THAT SYNCHRONIZE IS OK AND SET FRBRC1.
        IF FRBRC1=0 THEN
          DO.
            INVOKE RECOVERY MANAGER FOR SINGLE PHASE COMMIT
            IF VOTE IS NO THEN
              DO.
                INVOKE RECOVERY MANAGER TO BACKOUT UPDATES.
                INVOKE RECOVERY MANAGER TO FREE BLOCKS.
                SET RETURN AND REASON CODE TO
                    'ABORT PROCESSING HAS BEEN PERFORMED'.
              END.
            ELSE
              INVOKE RECOVERY MANAGER TO FREE BLOCKS.
          END.
      END.
    WHEN ('COMM')                     /=   PERFORM PHASE 2 OF COMMIT=/
      DO.
        VALIDATE THAT COMMIT IS OK AND SET FRBRC1.
        IF FRBRC1=0 THEN         /=   COMM VALID FOR THREAD    =/
          DO.
            INVOKE RECOVERY MANAGER TO COMMIT UPDATES.
            INVOKE RECOVERY MANAGER TO FREE BLOCKS.
          END.
      END.
    WHEN ('ABRT')                     /=   ABORT PREVIOUS UPDATES   =/
      DO.
        INVOKE RECOVERY MANAGER TO BACKOUT UPDATES.
        INVOKE RECOVERY MANAGER TO FREE BLOCKS.
      END.
    OTHERWISE
      SET RETURN AND REASON CODE TO 'COMMIT_ OPTION'.
  END.
  TRACE MODULE EXIT.
  RETURN.
END DSN3TR00.
```

TABLE 16
(AB00) BACKOUT UPDATES TO A THREAD'S RESOURCES

```
DSN3AB00: PROCEDURE.
  TRACE MODULE ENTRY.
  IF PSW KEY NOT EQUAL TO ISSUER OF CREATE THREAD THEN ABEND.
  IF FRB PARAMETER COUNT IS ZERO THEN
    DO.
      INVOKE RECOVERY MANAGER TO BACKOUT UPDATES.
      SET RETURN AND REASON CODE TO 'SUCCESSFUL COMPLETION'.
      RESET SUPPRESS RARQ BIT IN RAL HEADER.
    END.
  ELSE
    SET RETURN AND REASON CODE TO 'FRB PARAMETER COUNT'.
  TRACE MODULE EXIT.
  RETURN.
END DSN3AB00.
```

TABLE 17
(SY00) SYNCHRONIZE—SINGLE PHASE COMMIT

```
DSN3SY00: PROCEDURE.
  TRACE MODULE ENTRY.
  IF PSW KEY NOT EQUAL TO ISSUER OF CREATE THREAD THEN ABEND.
  IF FRB PARAMETER COUNT IS ZERO THEN
    DO.
      INVOKE RECOVERY MANAGER TO COMMIT UPDATES.
      IF VOTE IS NO THEN
        DO.
          INVOKE RECOVERY MANAGER TO BACKOUT UPDATES.
          SET RETURN AND REASON CODE TO 'ABORT PERFORMED'.
        END.
      ELSE
        SET RETURN AND REASON CODE TO 'SUCCESSFUL COMPLETION'.
    END.
  ELSE
    SET RETURN AND REASON CODE TO 'FRB PARAMETER COUNT'.
  TRACE MODULE ENTRY.
  RETURN.
END DSN3SY00.
```

TABLE 18
(RIA0) SSAM RESOLVE INDOUBT OR PROCESSING

```
DSN3RIA0: PROCEDURE.
  TRACE MODULE ENTRY.
  VALIDATE 1) FRB PARAMETER COUNT, 2) PARMLIST AND
           3) RESOLUTION PARAMETER AND EXIT ON ERROR.
  SELECT (RIUR_REQUEST).
    WHEN ('SHOW')
      DO.
        IF A NID IS SPECIFIED IN THE RESPAR AND THE
            AGNT AND CCB BLOCKS IDENTIFYING THE INDOUBT UR
            ARE LOCATED IN THE AGENT CHAIN THEN
          LOCATE THE 'NEXT' NID IDENTIFYING AN INDOUBT
          UR IN THE AGNT CHAIN
        ELSE
          LOCATE THE 'FIRST' NID IDENTIFYING AN INDOUBT
          UR IN THE AGNT CHAIN FOR THIS CONNECTION NAME
        IF AN INDOUBT UR IS LOCATED THEN
          UPDATE RESOLUTION PARAMETER.
        ELSE.
          SET RETURN AND REASON CODES TO
              'NO INDOUBT UR EXISTS AFTER THE NAMED ONE'.
      END.
```

TABLE 18 (contd.)

```
WHEN ('ABRT', 'COMM')
  DO.
    IF A NID IS SPECIFIED IN THE RESPAR AND THE
        AGNT AND CCB BLOCKS IDENTIFYING THE INDOUBT UR
        ARE LOCATED IN THE AGNT CHAIN THEN
      IF THE REQUEST IS FOR A THREAD WHICH DIED
          DURING THIS EXECUTION OF THE DBMS THEN
        DO.
          IF THE THREAD IS THROUGH EOT THEN
            DO.
              CONNECT THE AGENT STRUCTURE TO THIS ADDR SPACE.
              IF 'ABRT' THEN
                INVOKE RECOVERY MANAGER ABORT PROCESSING.
              ELSE
                INVOKE RECOVERY MGR 1 PHASE COMMIT PROCESSING.
              SET INDOUBT UR RESOLVED IN AGENT BLOCK.
              TERMINATE THREAD AND SIGNON AGENTS.
              DISCONNECT THE AGENT STRUCTURE FROM ADDRESS SPACE.
              CLEAN UP AGNT BLOCKS.
            END.
          ELSE
            DO.
              TRY TO TERMINATE THE THREAD USING NORMAL PATH.
              IF THREAD TERMINATED THEN
                IF REQUEST WAS AN 'ABRT' THEN
                  SET RETURN AND REASON CODES TO
                    'SUCCESSFUL COMPLETION'.
                ELSE
                  SET RETURN AND REASON CODE TO
                    'UR RELATED THREAD STILL EXECUTING'.
            END.
        END.
      ELSE                         /=   REQUEST FOR A RESTART UR =/
        DO.
          CALL RECOVERY MANAGER TO RESOLVE THE INDOUBT UR.
          SET INDOUBT UR RESOLVED IN AGENT BLOCK.
          CLEAN UP THE AGNT BLOCKS.
        END.
    ELSE                           /=   NID NOT FOUND          =/
      SET RETURN AND REASON CODES TO 'NID NOT FOUND'.
    END.                           /=   END OF 'ABRT' OR 'COMM'  =/
  OTHERWISE
    SET RETURN AND REASON CODES TO
      'RESOLUTION PARAMETER' INVALID.
  END.                             /=   END OF SELECT-GROUP      =/
  TRACE MODULE EXIT.
  RETURN.
```

TABLE 19
(PRH) PROGRAM REQUEST HANDLER INTERFACE

```
DSNAPRH: PROC.
IF THE FRB RALE NUMBER IS "SSAM"
    AND THE FRB FVLE NUMBER IS "IDENTIFY"
    AND THE FRB QUALIFIER NUMBER IS "RUN" THEN
  DO.
    LINK TO INVOKE DSN3ID00 (FIRST IDENTIFY MODULE).
    RETURN CODE(ZERO).
  END.
CALL DSN3APRH0 VIA "PC" (PC NUMBER FROM FRB).
RETURN CODE(ZERO).
END.
```

TABLE 20
(PRH0) PROGRAM REQUEST HANDLER

```
DSNAPRH0: PROC.
IF PRIMARY ASID −= HOME ASID THEN
    SET FRB RETURN/REASON CODES AND RETURN VIA PCLINK AND PT.
IF ERROR TRANSLATION IS REQUESTED OR SUBSYSTEM IN NOT UP THEN
    GETMAIN—THE PRHW, INITIALIZE IT AND
        LOCATE THE START OF AUTOMATIC STORAGE.
ELSE
    DO.
        OBTAIN THE SSAT VALUE ASSOCIATED WITH THE TCB FOR THIS SUBSYS.
        IF SSAT VALUE IS ZERO IS NOT A PRHW THEN
            SET FRB RETURN/REASON CODES AND RETURN VIA PCLINK AND PT.
        LOCATE THE START OF AUTOMATIC STORAGE.
    END.
REMEMBER WHETHER WE ARE USING A GETMAINED PRHW OR THE ONE FROM SSAT.
SAVE THE INPUT PARAMETERS AND NORMALIZE CALLER'S PARAMETER LIST.
MAKE A LOCAL COPY OF THE CALLER'S FRB:
SETUP FRBPARM AND FRBPCNT AS NORMALIZED ABOVE.
ZPROCESS:
DO.
    IF WE GETMAINED THE PRHW (IN "XGETSTG") THEN
        ZNONTRAN:
        DO.
            IF PROGRAM REQUEST HANDLERS ARE NOT ACTIVE THEN
                DO.
                    SET FRB RETURN/REASON CODES.
                  . IF THE FRBRALE VALUE IS VALID THEN
                        CALL THE APPROP ERROR TRANSLATOR.
                    SET INDICATOR TO FREEMAIN THE PRHW UPON EXIT.
                    ZERO OUT THIS TCB'S SSAT ENTRY.
                    LEAVE ZNONTRAN.
                END.
            USING "CDS". MARK THIS TCB'S AGNT "IN USE".
            IF THIS TCB IS NOT ASSOCIATED WITH THE CURRENT
                INSTANCE OF THE SUBSYSTEM (IE "CDS" FAILED) THEN
                DO.
                    SET FRB RETURN/REASON CODES.
                    LEAVE ZNONTRAN.
                END.
            IF IT IS A RECURSION INTO THE SUBSYSTEM ("CDS" FAILED) THEN
                DO.
                    SET FRB RETURN/REASON CODES.
                    LEAVE ZPROCESS.
                END.
```

TABLE 20A
(PRH0) PROGRAM REQUEST HANDLER

```
IF THE RECOVERY COORDINATOR ASSOCIATED WITH THE CURRENT
    AGENT HAS ALREADY TERMINATED THEN
  DO.
    SET FRB RETURN/REASON CODES.
    SET INDICATOR TO FREEMAIN THE PRHW UPON EXIT.
    FORCE THIS AGNT THROUGH END OF TASK PROCESSING
    ZERO OUT THIS TCB'S SSAT ENTRY.
    LEAVE ZNONTRAN.
  END.
  INDICATE THAT THE EB IS NOW IN SUBSYSTEM CODE.
  IF FRBRALE, FRBFVLE, OR FRBQUAL IS INVALID THEN
    DO.
      SET FRB RETURN/REASON CODES.
      LEAVE ZNONTRAN.
    END.
  IF AN APPROP PROGRAM REQUEST HANDLER (PRH) EXISTS THEN
    INVOKE IT OR ISSUE DSNARARQ.
    /= SPECIFIC OPERATION PROCESSOR IS INVOKED HERE =/
  ELSE
    SET FRB RETURN/REASON CODES.
  END OF "ZNONTRAN".
ELSE
  DO.
    IF FRBRALE VALUE IS INVALID THEN
      SET FRB RETURN/REASON CODES.
    ELSE
      DO.
        IF FRBQUAL IS NOT A TRANSLATION REQUEST THEN
          SET FRB RETURN/REASON CODES.
        INVOKE THE APPROP ERROR TRANSLATOR.
      END.
  END.
IF THE EB ASSOCIATED WITH THIS TCB HAS NOT TERMINATED THEN
  DO.
    MARK EB AS HAVING RETURNED TO THE APPLICATION.
    MARK THE AGNT AS "NOT IN USE" IF IT WAS UPDATED EARLIER.
  END.
ELSE
  SET INDICATOR TO FREEMAIN THE PRHW UPON EXIT.
END OF "ZPROCESS".
COPY THE UPDATED FRB BACK TO THE CALLER'S FRB.
IF WE SHOULD FREEMAIN THE PRHW (IF THE GETMAINED IT IN "XGETSTG"
    OR THE EB ASSOCIATED WITH THE TCB HAS TERMINATED) THEN
  FREEMAIN—THE PRHW.
RETURN TO THE CALLER.
END OF "DSNAPRH0".
```

TABLE 21A
DIRECTORY (PART 1)

| DIR 1 NAME | ALLOCATION PROCESSING FLAGS | | | | PERSISTENT FLAGS WHICH BECOME PART OF THE ENVIRONMENT | | | | | | | |
|---|---|---|---|---|---|---|---|---|---|---|---|---|
| | TCBH | REC0 | UNQ2 | IKEY | CTHD | RLTD | CORR | PART | STUI | THRD | RIDT | INQ0 |
| MASS I | | 1 | 1 | 1 | 1 | | | | | | | |
| MASS S | | | | | 1 | | | | | | | |
| MASS C Y Y | | 1 | 1 | | 1 | 1 | | | 1 | | 1 | 1 |
| MASS C Y N | | 1 | 1 | | 1 | 1 | 1 | | 1 | | | |
| MASS C Y b | | 1 | 1 | | 1 | 1 | 1 | | 1 | | | |
| MASS C Y Q | | 1 | 1 | | 1 | 1 | | | 1 | 1 | 1 | 1 |
| MASS C N Y | | 1 | 1 | | 1 | 1 | | | | 1 | 1 | 1 |
| MASS C N N | | 1 | 1 | | 1 | 1 | 1 | | 1 | | | |
| MASS C N b | | 1 | 1 | | 1 | 1 | 1 | | 1 | | | |
| MASS C N Q | | 1 | 1 | | 1 | 1 | | | 1 | 1 | 1 | 1 |
| SASS I | 1 | 1 | 1 | 1 | 1 | | | | | | | |
| SASS S | | | | | 1 | | | | | | | |
| SASS C Y Y | | 1 | 1 | | 1 | 1 | | | 1 | | 1 | 1 |
| SASS C Y N | | 1 | 1 | | 1 | 1 | 1 | | | | | |
| SASS C Y b | | 1 | 1 | | 1 | 1 | 1 | | | | | |
| SASS C N Y | | 1 | 1 | | 1 | 1 | | | | 1 | 1 | 1 |
| SASS C N N | | 1 | 1 | | 1 | 1 | 1 | | | 1 | | |
| SASS C N b | | 1 | 1 | | 1 | 1 | 1 | | | 1 | | |
| BATCH I | | | | | 1 | | | 1 | | | | |
| BATCH C Y N | | | | | 1 | 1 | 1 | 1 | | | 1 | |
| BATCH C Y b | | | | | 1 | 1 | 1 | 1 | | | 1 | |
| BATCH C N N | | | | | 1 | 1 | 1 | 1 | | | 1 | |
| BATCH C N b | | | | | 1 | 1 | 1 | 1 | | | 1 | |

TABLE 21B
DIRECTORY (PART 2)

| DIR 1 NAME | | | | | | | SPECIFIC OPERATION PROCESSOR MODULE NAME FOR EACH GENERIC OPERATION | | | | | | | |
|---|---|---|---|---|---|---|---|---|---|---|---|---|---|---|
| | | | | TERM | IDEN | SIGN | CTHD | RIUR | SYNC | RSV1 | PREP | COMM | ABRT | EXIT |
| MASS | I | | | ID80 | | SI30 | | RIUR | | | | | | EXIT |
| MASS | S | | | SI80 | | SI31 | CT30 | | | | | | | |
| MASS | C | Y | Y | CT80 | | SI32 | | | | | PR00 | CM00 | AB00 | |
| MASS | C | Y | N | CT80 | | SI32 | | | SY00 | | | | AB00 | |
| MASS | C | Y | b | CT80 | | SI32 | | | SY00 | | | | AB00 | |
| MASS | C | Y | Q | CT80 | | SI32 | | | | | PR00 | CM00 | AB00 | |
| MASS | C | N | Y | CT80 | | SI32 | | | | | PR00 | CM00 | AB00 | |
| MASS | C | N | N | CT80 | | SI32 | | | SY00 | | | | AB00 | |
| MASS | C | N | b | CT80 | | SI32 | | | SY00 | | | | AB00 | |
| MASS | C | N | Q | CT80 | | SI32 | | | | | PR00 | CM00 | AB00 | |
| SASS | I | | | ID80 | | SI30 | | RIUR | | | | | | EXIT |
| SASS | S | | | SI80 | | SI31 | CT30 | | | | | | | |
| SASS | C | Y | Y | CT80 | | SI32 | | | | | PR00 | CM00 | AB00 | |
| SASS | C | Y | N | CT80 | | SI32 | | | SY00 | | | | AB00 | |
| SASS | C | Y | b | CT80 | | SI32 | | | SY00 | | | | AB00 | |
| SASS | C | N | Y | CT80 | | SI32 | | | | | PR00 | CM00 | AB00 | |
| SASS | C | Y | N | CT80 | | SI32 | | | SY00 | | | | AB00 | |
| SASS | C | N | b | CT80 | | SI32 | | | SY00 | | | | AB00 | |
| BATCH | I | | | ID80 | | | CT30 | | | | | | | EXIT |
| BATCH | C | Y | N | CT80 | | | | | SY00 | | | | AB00 | |
| BATCH | C | Y | b | CT80 | | | | | SY00 | | | | AB00 | |
| BATCH | C | N | N | CT80 | | | | | SY00 | | | | AB00 | |
| BATCH | C | N | b | CT80 | | | | | SY00 | | | | AB00 | |

TABLE 22
DIRECTORY FLAGS DESCRIPTIONS

| | |
|---|---|
| TCBH | CHECK TCB HIERARCHY |
| RECO | RECOVERY COORDINATION IS ALLOWED FOR THIS PROTOCOL |
| UNQ2 | ALL NIDS MUST BE UNIQUE WITHIN THIS CONNECTION |
| IKEY | VALIDATE THAT IDENTIFIER KEY MATCHES COORDINATOR |
| CTHD | AGENT SERVICES THREAD FLAG |
| RLTD | RECOVERY MANAGER RELATED FLAG |
| CORR | THIS AGENT IS THE COORDINATOR |
| PART | THIS AGENT IS A PARTICIPANT |
| STUI | SUBJECT TO USER INTERRUPTIONS (USER CONTROLS TASK) |
| THRD | THIS IS A THREAD |
| RIDT | RESOLVE INDOUBT HAS BEEN SPECIFIED |
| INQO | THIS AGENT WILL OPERATE INQUIRY ONLY |

**Claims**

1. A method for operating a computing apparatus in which a subsystem (70) comprising a pool of available functional modules (780—800) supports a plurality of access protocols (590) and allocation levels (100—148) of user tasks (80—85), the method assuring that user requests valid only under some access protocols and allocation levels are not issued to the functional modules by users authorized only for different access protocols and allocation levels, characterized by the steps:

generating for a user an allocation descriptor (580) describing the functional capability for a user under a given access protocol and allocation level;

responsive to a request from a user which does not imply a change in functional capability, executing a functional module on behalf of the user according to the user's currently allocated functional capability;

and responsive to a request from a user which implies a change in the functional capability of the user, allocating functional modules to the user according to a new functional capability only if the new allocation is allowed by the user's current functional capability.

2. The method of claim 1, further comprising the step of defining in the allocation descriptor (580) certain key parameters (582) effecting the execution capabilities of the user.

3. The method of claim 1, further comprising the steps of:

providing an array containing allocation descriptors, each allocation descriptor including

(1) current allocation process modifiers;

(2) a plurality of generic operation request/specific operation processor (GOR/SOP) pairs (640, 660), each pair specifying the generic function to be provided and a specific processor to execute that function; and

(3) a set of qualifier flags (620);

an allocation descriptor being provided for each generic operation supported for each protocol, and also for selected specified invocations of generic operations; and

during execution of a subsystem responsive to a generic operation request, invoking a previously allocated SOP which will:

(1) build an array access key which includes:

(a) encoded parameters from this invocation;

(b) the protocol name taken from the execution environment;

(c) the GOR name;

(2) access the array;

(3) if no output, terminate the operation with an error indication;

(4) else process current allocation process modifiers;

(5) if any fail, terminate the operation with an error indication;

(6) else allocate listed GOR/SOP pairs; and

set persistent qualifier flags in the environment.

4. A computing apparatus in which a subsystem (70) comprising a pool of functional modules (780—800) supports a plurality of access protocols (590) and allocation levels (100—148) of user tasks (80—85), the apparatus assuring that user requests valid only under some access protocols are not issued by users authorized only for different access protocols, characterized by;

allocation descriptor means (580) describing a user's functional capability under a given access protocol and allocation level;

means (300, 322, 560) responsive to a request from a user which does not imply a change in functional capability for executing a functional module on behalf of the user according to the user's currently allocated functional capability; and responsive to a request from a user which implies a change in the user's functional capability for allocating functional modules to the user according to a new functional capability only if this allocation is allowed by the user's current functional capability.

5. The computing apparatus of claim 4 wherein said allocation descriptor means (580) includes means (582, 600, 640) for storing for each of a plurality of users the generic operations allocated to the user at the current allocation level of the user.

6. The computing apparatus of claim 5 wherein said allocation descriptor means (580) includes means (650) for storing for each generic operation allocated to the user a single specific operation processor (660—667) to be executed on behalf of the user, each said specific operation processor implementing a generic operation for one or more access protocols.

7. A computing apparatus of claim 4 assuring that user requests valid only under some allocation levels (100—148) are not issued by users authorized only for different allocation levels, comprising:

state definition means (560) for defining for a given user a level of allocation; and

allocation means for establishing within said state definition means on behalf of a given user a new level of allocation only if permitted by a current level of allocation.

8. The apparatus of claim 7 wherein said state definition means includes means (590—596) allocating to the user a specific set of allowable functions, said allowable functions being specified by a combination of access protocol (590) and predefined parameters (592, 594, 596) selectively including an allocation function; and wherein said allocation means is operative to establish a new level of allocation only in response to a request corresponding to a predetermined combination of access protocol and said allocation function.

9. The apparatus of claim 7 wherein said state definition means includes means defining the set of generic operation requests (640) executable on behalf of said given user at the current level of allocation and a specific operation processor (660) for implementing each generic operation request; and further including means for assuring that entry into a specific operation processor is permitted only by users authorized by said state definition means.

## Patentansprüche

1. Methode zur Bedienung eines Rechengerätes, in welchem ein Subsystem (70), enthaltend eine Gruppe von verfügbaren Funktionsmodulen (780—800), eine Vielzahl von Zugriffsprotokollen (590) und Zuordnungsebenen (100—148) von Benutzeraufgaben (80—85) trägt, wobei die Methode sicherstellt, dass Benutzeranforderungen, welche nur unter einigen Zugriffsprotokollen und Zuordnungsebenen zulässig sind, nicht durch Benutzer, die nur für verschiedene Zugriffsprotokolle und Zuordnungsebenen autorisiert sind, an die Funktionsmodule ausgegeben werden, gekennzeichnet durch die Schritte:

Erzeugung für einen Benutzer eines Zuordnungsdeskriptors (580), welcher die Funktionsfähigkeit für einen Benutzer unter einem gegebenen Zugriffsprotokoll und einer gegebenen Zuordnungsebene beschreibt;

Ansprechend auf eine Anforderung von einem Benutzer, welche nicht einen Wechsel in der Funktionsfähigkeit zur Folge hat, Ausführung eines Funktionsmoduls zugunsten des Benutzers, entsprechend der dem Benutzer gegenwärtig zugeordneten Funktionsfähigkeit; und ansprechend auf eine Benutzer-Anforderung, die einen Wechsel in der Funktionsfähigkeit des Benutzers zur Folge hat, Zuordnung von Funktionsmodulen zu dem Benutzer entsprechend einer neuen Funktionsfähigkeit, nur wenn die neue Zuordnung von der gegenwärtigen Funktionsfähigkeit des Benutzers erlaubt ist.

2. Methode nach Anspruch 1, enthaltend ferner die Schritte zur Definierung im Zuordnungsdeskriptor (580) von bestimmten Schlüsselparametern (582), welche die Ausführungsfähigkeiten des Benutzers ausführen.

3. Methode nach Anspruch 1, enthaltend ferner die Schritte von:

Bereitstellung einer Matrix, welche Zuordnungsdeskriptoren enthält, wobei jeder Zuordnungsdeskriptor umfasst

(1) Verarbeitungsmodifikatoren der gegenwärtigen Zuordnung;

(2) Eine Vielzahl von Prozessor-Paaren (640, 660) zur auswählbaren Bedienungsanforderung/ spezifischen Bedienung (GOR/SOP), wobei jedes Paar die zur Verfügung zu stellende auswählbare Funktion und einen spezifischen Prozessor zur Ausführung jener Funktion angibt; und

(3) einen Satz von Kennzeichnungsflaggen (620);

wobei ein Zuordnungsdeskriptor zur Verfügung gestellt wird für jede auswählbare Bedienung, die für jedes Protokoll unterhalten wird und auch für ausgewählte spezifizierte Aufrufe von ausgewählten Bedienungen; und

während der Abwicklung eines Subsystems, ansprechend auf eine auswählbare Bedienungsanforderung, eine vorhergehend zugeordnete SOP aufrufend, welche folgendes ausführen wird:

(1) Aufbau eines Matrix-Zugriffsschlüssels, welcher enthält:

(a) kodierte Parameter von diesem Aufruf;

(b) den von der Ausführungsumgebung genommenen Protokollnamen;

(c) den GOR-Namen;

(2) Zugriff zur Matrix

(3) bei fehlender Ausgabe, Beendigung der Bedienung mit einer Fehleranzeige;

(4) ferner Verarbeitung der gegenwärtigen Zuordnungsverarbeitungsmodifikatoren

(5) wenn irgendetwas fehlschlägt, Beendigung der Bedienung mit einer Fehleranzeige;

(6) ferner Zuordnung von aufgelisteten GOR/SOP-Paaren; und

Setzen bleibender Kennzeichnungsflaggen in der Umgebung.

4. Rechengerät, in welchem ein Subsystem (70), enthaltend eine Gruppe von Funktionsmodulen (780—800), eine Vielzahl von Zugriffsprotokollen (590) und Zuordnungsebenen (100—148) von Benutzeraufgaben (80—85) trägt, wobei das Gerät sicherstellt, dass Benutzeranforderungen, welche nur unter einigen Zugriffsprotokollen zulässig sind, nicht durch Benutzer ausgegeben werden, die nur für verschiedene Zugriffsprotokolle autorisiert sind, gekennzeichnet durch:

Zugriffsdeskriptormittel (580), welche eine Benutzer-Funktionsfähigkeit unter einem gegebenen Zugriffsprotokoll und einer gegebenen Zuordnungsebene beschreiben;

Mittel (300, 322, 560), ansprechend auf eine Benutzer-Anforderung, die nicht einen Wechsel in der Funktionsfähigkeit zur Ausführung eines Funktionsmoduls zugunsten des Benutzers entsprechend der dem Benutzer gegenwärtig zugeordneten Funktionsfähigkeit zur Folge hat; und ansprechend auf eine Benutzer-Anforderung, die einen Wechsel in der Funktionsfähigkeit des Benutzers zur Folge hat für die Zuordnung von Funktionsmodulen zu dem Benutzer entsprechend einer neuen Funktionsfähigkeit, nur wenn diese Zuordnung von der gegenwärtigen Funktionsfähigkeit des Benutzers erlaubt ist.

5. Rechengerät nach Anspruch 4, worin die genannten Zuordnungsdeskriptormittel (580) Mittel (582, 600, 640) enthalten zur Speicherung für einen jeden von einer Vielzahl von Benutzern der dem Benutzer bei der gegenwärtigen Zuordnungsebene des Benutzers zugeordneten auswählbaren Bedienungen.

6. Rechengerät nach Anspruch 5, worin die genannten Zuordnungsdeskriptormittel (580) Mittel (650) enthalten zur Speicherung für jede dem Benutzer zugeordneten auswählbaren Bedienung eines einzigen zugunsten des Benutzers abzuwickelnden spezifischen Bedienungsprozessors (660—667), wobei jeder der genannten spezifischen Bedienungsprozessoren eine auswählbare Bedienung für eine oder mehrere Zugriffsprotokolle realisiert.

7. Rechengerät nach Anspruch 4, welches sicherstellt, dass die nur unter einigen Zuordnungsebenen (100—148) zulässigen Benutzeranforderungen nicht von Benutzern, die nur für verschiedene Zuordnungsebenen autorisiert sind, ausgegeben werden, enthaltend:

Zustandsdefinitionsmittel (560) zur Definierung einer Zuordnungsebene für einen gegebenen Benutzer; und

Zuordnungsmittel zur Festsetzung innerhalb der genannten Zustandsdefinitionsmittel zugunsten eines gegebenen Benutzers einer neuen Zuordnungsebene, nur wenn dies durch eine gegenwärtige Zuordnungsebene erlaubt ist.

8. Gerät nach Anspruch 7, worin die genannten Zustandsdefinitionsmittel Mittel (590—596) enthalten, welche dem Benutzer einen spezifischen Satz von zulässigen Funktionen zuordnet, wobei die genannten zulässigen Funktionen durch eine Kombination von Zugriffsprotokoll (590) und vorgegebenen Parametern (592, 594, 596) angegeben werden, welche wahlweise eine Zuordnungsfunktion einschliessen; und worin die genannten Zuordnungsmittel wirksam sind, um eine neue Zuordnungsebene nur auf eine Anforderung ansprechend festzusetzen, welche einer vorbestimmten Kombination von Zugriffsprotokoll und der genannten Zuordnungsfunktion entspricht.

9. Gerät nach Anspruch 7, worin die genannten Zustandsdefinitionsmittel Mittel beinhalten, welche den Satz von auswählbaren Bedienungsanforderungen (640) enthalten, die zugunsten des genannten gegebenen Benutzers bei der gegenwärtigen Zuordnungsebene ausführbar sind und einen spezifischen Bedienungsprozessor (660) zur Realisierung einer jeden auswählbaren Bedienungsanforderung; und ferner Mittel beinhalten zur Sicherstellung, dass die Eingabe in einen spezifischen Bedienungsprozessor nur durch Benutzer erlaubt ist, welche durch die genannten Zustandsdefinitionsmittel autorisiert sind.

## Revendications

1. Procédé pour faire fonctionner un dispositif informatique, dans lequel un sous-système (70) comportant un ensemble de modules fonctionnels disponibles (780—800) prend en charge une pluralité de protocoles d'accès (590) et de niveaux d'affectation (100—148) de tâches d'utilisateurs (80—85), le procédé garantissant que des demandes d'utilisateurs valables uniquement pour certains protocoles d'accès et certains niveaux d'affectation ne sont pas envoyées aux modules fonctionnels par des utilisateurs autorisés uniquement pour des protocoles d'accès différents et des niveaux d'affectation différents, caractérisé par les étapes consistant à:

produire, pour un utilisateur, un descripteur d'affectation (580), qui décrit la capacité fonctionnelle d'un utilisateur pour un protocole d'accès donné et un niveau d'affectation donné;

activer, en réponse à une demande provenant d'un utilisateur, qui ne requiert pas une modification de la capacité fonctionnelle, un module fonctionnel pour le compte de l'utilisateur, en fonction de la capacité fonctionnelle actuellement affectée de l'utilisateur; et affecter, en réponse à une demande provenant d'un utilisateur, qui implique une modification de la capacité fonctionnelle de cet utilisateur, des modules fonctionnels à l'utilisateur en fonction d'une nouvelle capacité fonctionnelle, uniquement si la nouvelle affectation est permise par la capacité fonctionnelle actuelle de l'utilisateur.

2. Procédé selon la revendication 1, incluant en outre l'étape consistant à définir, dans le descripteur d'affectation (580), certains paramètres de codes (582) fournissant les capacités d'exécution de l'utilisateur.

3. Procédé selon la revendication 1, incluant en outre les étapes consistant à:

prévoir un réseau contenant des descripteurs d'affectation, chaque descripteur d'affectation incluant:

(1) des modificateurs du processus actuel d'affectation;

(2) une pluralité de couples (640, 660) de demande générique de fonctionnement/processeur de traitement spécifique (GOR/SOP), chaque couple spécifiant la fonction générique devant être fournie et un processeur spécifique pour exécuter cette fonction; et

(3) en ensemble de drapeaux de qualificateurs (620);

un descripteur d'affectation étant prévu pour chaque opération générique prise en charge pour chaque protocole, et également pour des appels sélectionnés spécifiés d'opérations génériques; et

pendant l'activation d'un sous-sytème sensible à une demande d'opération générique, appeler un processeur SOP affecté antérieurement, qui:

(1) établira un code d'accès au réseau, incluant:

(a) des paramètres codés obtenus à partir de cet appel;

(b) le nom du protocole choisi pour l'environnement de mise en oeuvre;

(c) le nom de la demande GOR;

(2) accède au réseau;

(3) s'il n'existe aucune sortie, arrête l'opération avec une indication d'erreur;

(4) sinon traite des modificateurs actuels du processus d'affectation;

(5) dans le cas d'une panne, arrête l'opération avec une indication d'erreur;

(6) sinon affecte des couples GOR/SOP répertoriés; et

règle des drapeaux permanents de qualificateurs dans l'environnement.

4. Dispositif informatique, dans lequel un sous-système (70) comportant un ensemble de modules fonctionnels disponibles (780—800) prend en charge une pluralité de protocoles d'accès (590) et de niveaux d'affectation (100—148) de tâches d'utilisateurs (80—85), le procédé garantissant que des demandes d'utilisateurs valables uniquement pour certains protocoles d'accès et certains niveaux d'affectation ne sont pas envoyées aux modules fonctionnels par des utilisateurs autorisés uniquement pour des protocoles d'accès différents et des niveaux d'affectation différents, caractérisé par:

des moyens (580) formant descripteurs d'affectation décrivant une capacité fonctionnelle de l'utilisateur dans le cas d'un protocole d'accès donné et d'un niveau d'affectation donné;

des moyens (300, 322, 560) sensibles à une demande provenant de l'utilisateur, qui n'implique pas une modification de la capacité fonctionnelle pour l'activation d'un module fonctionnel sur la demande de l'utilisateur en fonction de la capacité fonctionnelle actuellement affectée de l'utilisateur; et sensibles à une demande de l'utilisateur, qui implique une modification de la capacité fonctionnelle de l'utilisateur pour l'affectation de modules fonctionnels à ce dernier en fonction d'une nouvelle capacité fonctionnelle, uniquement si cette affectation est permise par la capacité fonctionnelle actuelle de l'utilisateur.

5. Dispositif informatique selon la revendication 4, dans lequel lesdits moyens (580) formant descripteur d'affectation incluent des moyens (582, 600, 640) servant à mémoriser, pour chaque utilisateur faisant partie d'une pluralité d'utilisateurs, les opérations génériques affectées à l'utilisateur, pour le niveau actuel d'affectation de ce dernier.

6. Dispositif informatique selon la revendication 5, dans lequel lesdits moyens (580) formant descripteurs d'affectation incluent des moyens (650) servant à mémoriser, pour chaque opération générique affectée à l'utilisateur, un seul processeur spécifique de traitement (660—667), devant être activé sur la demande de l'utilisateur, chacun desdits processeurs spécifiques de traitement exécutant une opération générique pour un ou plusieurs protocoles d'accès.

7. Dispositif informatique selon la revendication 4, garantissant que des demandes de l'utilisateur valables uniquement pour certains niveaux d'affectation (100—148) ne sont pas délivrées par des utilisateurs autorisés uniquement pour différents niveaux d'affectation, incluaant:

des moyens (560) de définition d'états, servant à définir, pour un utilisateur donné, un niveau d'affectation; et

des moyens d'affectation servant à établir, à l'intérieur desdits moyens de définition d'états, pour le compte d'un utilisateur donné, un nouveau niveau d'affectation uniquement si cela est permis par un niveau actuel d'affectation.

8. Dispositif selon la revendication 7, dans lequel lesdits moyens de définition d'états incluent des moyens (590—596) affectant à l'utilisateur un ensemble spécifique de fonctions admissibles, lesdites fonctions admissibles étant spécifiées par une combinaison d'un protocole d'accès (590) et de paramètres prédéfinis (592, 594, 596) incluant, de façon sélective, une fonction d'affectation; et

dans lequel lesdits moyens d'affectation agissent de manière à établir un nouveau niveau d'affectation uniquement en réponse à une demande correspondant à une combinaison prédéterminée d'un protocole d'accès et de ladite fonction d'affectation.

9. Dispositif selon la revendication 7, dans lequel lesdits moyens de définition d'états contiennent des moyens définissant l'ensemble des demandes de fonctionnement génériques (640) pouvant être exécutées sur la demande de l'utilisateur donné, pour le niveau actuel d'affectation, et un processeur spécifique de traitement (660) pour l'exécution de chaque demande d'opération générique; et comprenant en outre des moyens pour garantir que l'entrée dans un processeur spécifique de traitement est permise uniquement à des utilisateurs autorisés par lesdits moyens de définition d'états.

EP 0 097 258 B1

MULTIPLE
VIRTUAL
SYSTEM ⟋ 50

FIG.1

BATCH OR TSO TCB

FIG.2

1

EP 0 097 258 B1

## CONTROL MEMORY
## CONTROL TCB

UNDEFINED STATE ——— 110

IDEN
(RC OPT
"YES")

TERM

112 — COORDINATOR
IDENTIFIED
STATE

RIUR
EXIT

# FIG.3

## DEP MEMORY PGM CONTROL OR
## OTHER NON-COORDINATOR TCBs

UNDEFINED STATE —— 120

IDEN
(RC OPT
"NO")

TERM

NON-COORDINATOR
IDENTIFIED STATE —— 122

SIGN

TERM

SIGNED-ON STATE ——— 124

SIGN

CTHD

TERM

APPLICATION
STATE —— 126

SIGN
SYNC

PREP

COMM
ABRT

TERM

COMMIT IN
PROGRESS —— 128

# FIG.4

2

CONTROL TCB

FIG 5

APPLICATION TCBs

FIG 6

FIG.7

FIG.8A

FIG.8B

ERLY ─322

DIR1 DIRECTORY ─560

| PROTOCOL | GOR | RNP | IRP | PTR |
|----------|-----|-----|-----|-----|
| BATCH | I | Y | Y | |
| SASS | S | N | N | |
| MASS | C | b | b | |

590    592  594  596  566

APL ─570
ACHR ─571
ACE ─573
─580

582 ─ RM SPECIFIC: SAED FOR SSAM | RMID ─584
| RMID ─586
| RMID ─583

APLE

## FIG.9

SAED ─600

| | SSAMs ─650 | SOPs ─660 |
|---|---|---|

| | GORs ─640 | FVL |
|---|---|---|
| | | HEADER |

602 ─ NDX(1)
604 ─ PC(1)
606 ─ NDX(2)
608 ─ PC(2)
610 ─ NDX(3)
PC(3)
612 ─ NDX(4)
PC(4)
. . .
614 ─ NDX(17)
PC(17)
620 ─ APLF
622 ─ HDRF
624 ─ RMUS

| GORs | FVL |
|------|-----|
| TERM | |
| IDEN | |
| SIGN | PC(3) |
| CTHD | |
| RIUR | PC(2) |
| SYNC | |
| PREP | |
| COMM | |
| ABRT | |
| EXIT | |

SPECIFIC SIGNON PROCESSOR ─662

SPECIFIC RESOLVE INDOUBT PROCESSOR ─664

SPECIFIC NOT SUPPORTED PROCESSOR ─666

SPECIFIC EXIT PROCESSOR ─665

SPECIFIC TERMINATE PROCESSOR ─667

## FIG.10

EP 0 097 258 B1

SOP MODULES

FIG.11

8